# EUROPEAN PATENT APPLICATION

(11) **EP 4 787 071 A1**
(43) Date of publication of application: **05.08.2026**
(21) Application number: 25784245.0
(22) Date of filing: 01.10.2025
(51) Int. Cl.: G03B 5/00, G03B 3/10, G03B 13/36, G03B 17/12, G03B 30/00, H04N 23/54, H04N 23/55

(54) **CAMERA MODULE AND ELECTRONIC DEVICE COMPRISING CAMERA MODULE**

(30) Priority: 15.10.2024 KR 20240140696; 26.03.2025 KR 20250039075
(71) Applicant: Samsung Electronics Co., Ltd, Suwon-si, Gyeonggi-do 16677 (KR)
(72) Inventor: YU, Donghun, Suwon-si, Gyeonggi-do 16677 (KR)
(74) Representative: Nederlandsch Octrooibureau
(86) International application number: PCT/KR2025/015675
(87) International publication number: WO 2026/084349

(57) **Abstract**

A camera module of an electronic device according to an embodiment of the disclosure may include a lens module comprising one or more lenses configured to be moved for an optical image stabilization (OIS) function and autofocus (AF) function, and a lens drive unit configured to move the lens module in x-axis, y-axis, and z-axis directions. The lens drive unit may include a permanent magnet disposed in a first carrier, a back yoke configured to bind the first carrier and the permanent magnet, and a suction yoke configured to absorb leakage magnetic flux of the permanent magnet. A first surface of the permanent magnet may face a first surface of the back yoke. The back yoke may include a first protrusion protruding from the first surface of the back yoke. The first protrusion of the back yoke may be disposed to overlap at least a portion of the permanent magnet. In addition, various embodiments may be provided.

## Description

### [Technical Field]

The disclosure relates to a camera module and an electronic device including the camera module.

### [Background Art]

Various electronic devices such as smartphones, tablet PCs, portable multimedia players (PMPs), personal digital assistants (PDAs), laptop personal computers (laptop PCs), smart watches, and head-mounted displays (HMDs) include cameras and may capture images using the cameras. As the number of users capturing photos or videos using electronic devices has increased, the performance of cameras included in electronic devices has also improved. For example, when capturing an image using a camera included in an electronic device, it may be necessary to adjust the focus on the subject or correct for shakes (e.g., camera shake) that may occur during the capturing of the subject in order to obtain a clear image.

A camera module used in an electronic device may include an autofocus (AF) function of automatically adjusting the focus of the lens on the subject and/or an optical image stabilizer (OIS) function of correcting shakes generated in the camera module when capturing the subject. The AF function and the optical image stabilizer function of the camera module may be driven based on electromagnetic force using magnets and coils.

The above information may be provided as a related art for understanding the disclosure. No claim or determination is made as to whether any part of the above description is applicable as prior art in relation to the disclosure.

### [Disclosure of Invention]

### [Solution to Problem]

Cameras applied to smartphones are generally developed with a focus on high resolution, high specifications, and thin profiles. Accordingly, the actuator of the camera module must include a larger permanent magnet to move a lens with increased size and weight. In addition, when the height, or thickness, of the camera module (e.g., the height in the z-axis direction) is reduced to satisfy the requirement for a thin profile, the thickness of the components disposed inside the camera module must be reduced. Due to the reduction in the thickness of the components, the permanent magnet is positioned downward (e.g., in the -z-axis direction), and this may affect the operation of other electronic components (e.g., a digitizer) disposed inside the electronic device due to the permanent magnet.

In addition, the reduction in the thickness of the camera module may reduce the distance between components, which may reduce the distance between an OIS permanent magnet and an OIS suction yoke, thereby increasing the suction force. Although the reduction in the distance between the permanent magnet and the suction yoke does not significantly affect the magnitude of the force generated, it may increase the load (e.g., unit of force required per unit of displacement), requiring greater force for the same driving. Although the volume of the suction yoke may be reduced to maintain appropriate suction force, a reduction in the volume of the suction yoke may increase the leakage magnetic flux in the downward direction (e.g., the -z-axis direction) of the camera module. Due to such changes in the size and position of the permanent magnet, the leakage magnetic flux of the camera module may increase, thereby potentially affecting the performance of components, such as a display, on the opposite side of the camera module.

As the demand for high-specification and high-resolution technologies in mobile phones continues to increase, the size of magnetic components inside the camera actuator is also continuously increasing, and the correlation with surrounding components of the camera actuator is becoming increasingly important.

According to an embodiment of the disclosure, there may be provided a camera actuator, in a camera module of an electronic device, for moving a lens group for an autofocus (AF) function and/or an optical image stabilizer (OIS).

When the size of the magnetic components of the camera actuator increases, the amount of leakage magnetic flux directed outward also increases, which may cause problems such as noise increase in components other than the camera or inside the camera itself. Various embodiments of the disclosure may provide a camera module capable of reducing the intensity of leakage magnetic flux directed downward (e.g., toward the digitizer or display) inside the camera module, and an electronic device including the camera module.

The technical problems to be solved by this document are not limited to the technical problems mentioned above, and other technical problems not mentioned may also be clearly understood by those skilled in the art to which the disclosure pertains from the following description.

A camera module of an electronic device according to an embodiment of the disclosure may include a lens module comprising one or more lenses configured for an optical image stabilization (OIS) function and autofocus (AF) function, and a lens drive unit configured to move the lens module in x-axis, y-axis, and z-axis directions. The lens drive unit may include a permanent magnet disposed in a first carrier, a back yoke configured to bind the first carrier and the permanent magnet, and a suction yoke configured to absorb leakage magnetic flux of the permanent magnet. A first surface of the permanent magnet may face a first surface of the back yoke. The back yoke may include a first protrusion protruding from the first surface of the back yoke. The first protrusion of the back yoke may be disposed to overlap at least a portion of the permanent magnet.

An electronic device including a camera module according to an embodiment of the disclosure may include a display disposed to display a screen in a front direction of the electronic device, a digitizer disposed on a rear surface of the display, electronic components disposed on the rear surface of the display; and a camera module configured to capture images in a rear direction of the electronic device. The camera module may include a lens module comprising one or more lenses configured to be moved for optical image stabilization (OIS) and autofocus (AF), and a lens drive unit configured to move the lens module in x-axis, y-axis, and z-axis directions. The lens drive unit may include a permanent magnet disposed in a first carrier, a back yoke configured to bind the first carrier and the permanent magnet, and a suction yoke configured to absorb leakage magnetic flux of the permanent magnet. A first surface of the permanent magnet may face a first surface of the back yoke. The first protrusion 1623 of the back yoke 1070 or 1620 are disposed to overlap at least a portion of the permanent magnet 1080 or 1610.

According to an embodiment, the camera module may be of a downward view type, a lens lead folded type, or a downward view folded type.

A camera module according to an embodiment of the disclosure and an electronic device including the camera module may reduce the intensity of leakage magnetic flux directed downward (e.g., toward the digitizer or display) inside the camera module using a back yoke and a suction yoke disposed inside the camera module.

A camera module according to an embodiment of the disclosure and an electronic device including the camera module may reduce the intensity of leakage magnetic flux directed from the camera module toward the digitizer and display, thereby blocking (or reducing) effects on the operation of electronic components disposed inside the electronic device.

In addition to the above, various effects that are directly or indirectly recognized through this document may also be provided.

The effects obtainable from the disclosure are not limited to those mentioned above, and other effects not mentioned may also be clearly understood by those skilled in the art to which the disclosure pertains from the following description.

### [Brief Description of Drawings]

In connection with the description of drawings, the same (or similar) reference numerals may be used to describe the same (or similar) elements, features, and structures.
FIG. 1 is a block diagram of an electronic device in a network environment according to an embodiment of the disclosure.
FIG. 2 is a perspective view of a first surface (e.g., a front surface) of an electronic device according to an embodiment of the disclosure.
FIG. 3 is a perspective view of a second surface (e.g., a rear surface) of an electronic device according to an embodiment of the disclosure.
FIG. 4 is a block diagram illustrating the configuration of an electronic device according to an embodiment of the disclosure.
FIG. 5 is a block diagram of a camera module according to an embodiment of the disclosure.
FIG. 6 is a drawing illustrating a camera module disposed in an electronic device according to an embodiment of the disclosure.
FIG. 7 is a drawing illustrating a downward view-type camera module according to an embodiment of the disclosure.
FIG. 8 is a perspective view of a downward view-type camera module according to an embodiment of the disclosure.
FIG. 9 is a drawing illustrating a lens lead folded-type camera module according to an embodiment of the disclosure.
FIGS. 10A to 10C are drawings illustrating a downward view folded-type camera module according to an embodiment of the disclosure.
FIGS. 11A and 11B are drawings illustrating control of a tilt and center shift of a permanent magnet relative to a coil using a suction yoke disposed in a camera module.
FIG. 12 is a drawing illustrating a back yoke binding a permanent magnet, and a suction yoke absorbing leakage magnetic flux of a permanent magnet in a camera module according to an embodiment of the disclosure.
FIGS. 13 to 15 are drawings illustrating various shapes of a back yoke of a camera module according to an embodiment of the disclosure.
FIGS. 16A and 16B are drawings illustrating shielding of leakage magnetic flux using a back yoke and a suction yoke of a camera module according to an embodiment of the disclosure.
FIG. 17 is a cross-sectional view illustrating the permanent magnet, the back yoke, and the suction yoke shown in FIGS. 16A and 16B.
FIG. 18 is a drawing illustrating an OIS drive unit using solenoid force.
FIGS. 19 and 20 are drawings illustrating an OIS drive unit using Lorentz force.
FIG. 21 is a drawing illustrating shielding of a permanent magnet by a back yoke of an AF drive unit.
FIG. 22 is a drawing illustrating shielding of a designated area of a lower surface of a permanent magnet using a back yoke.
FIG. 23 is a drawing illustrating the position of a suction yoke applied to a structure for shielding a designated area of a lower surface of a permanent magnet using a back yoke.
FIG. 24 is a drawing illustrating a state where a suction yoke is applied to a structure in which a back yoke overlaps a lower surface of a permanent magnet by more than a designated range.
FIG. 25 is a drawing illustrating shielding of a designated range of leakage magnetic flux of a permanent magnet using the back yoke and suction yoke shown in FIG. 24.

It should be noted that the same reference numerals are used throughout the drawings to depict the same or similar elements, features, and structures.

### [Mode for the Invention]

The following description with reference to the attached drawings is provided to assist a comprehensive understanding of various embodiments of the disclosure as defined by the claims and their equivalents. Although various specific details are included therein for clarity, they are intended for illustrative purposes only. Therefore, those skilled in the art to which the disclosure pertains will recognize that various modifications and changes of the embodiments described herein may be made without departing from the scope and concept of the disclosure. Additionally, for clarity and brevity, descriptions of well-known functions and configurations may be omitted.

The terms and words used in the following description and the claims are not limited to their literal or dictionary meanings but are intended to provide a clear and consistent understanding of this document as used by the applicant. Accordingly, it should be apparent to those skilled in the art that the following description of various embodiments of this document is provided for illustrative purposes only, instead of being intended to limit the disclosure as defined by the appended claims and their equivalents.

Unless the context clearly indicates otherwise, singular terms should be understood to include plural elements. Thus, the expression of "a component surface" may refer to one or more of such surfaces.

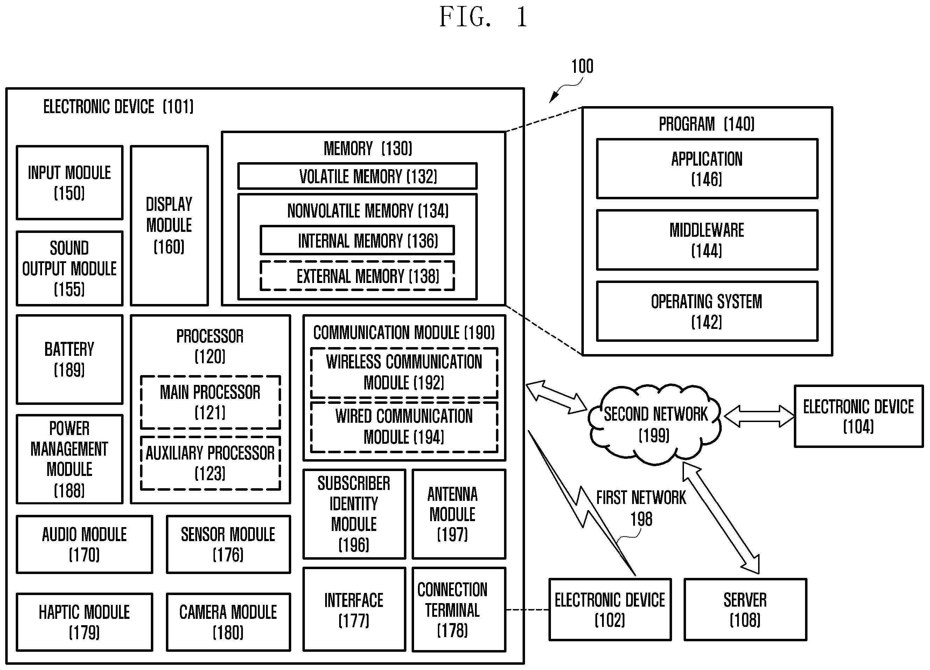

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

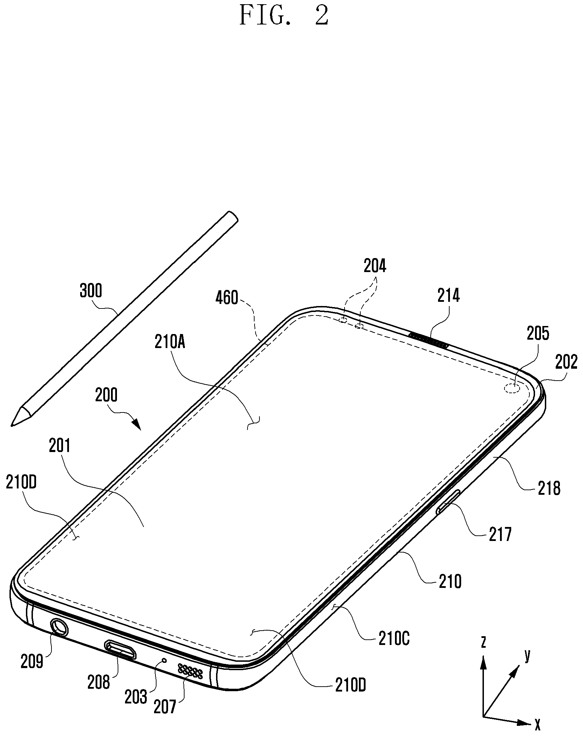

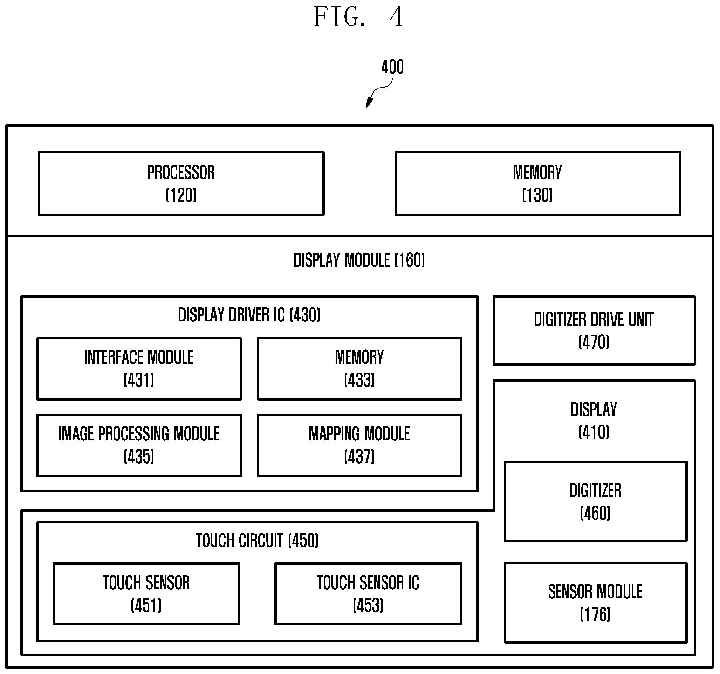

According to an embodiment, a display module 160 may include a bar-type or plate-type display (e.g., the display 201 in FIG. 2), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer drive unit (e.g., the digitizer drive unit 470 in FIG. 4).

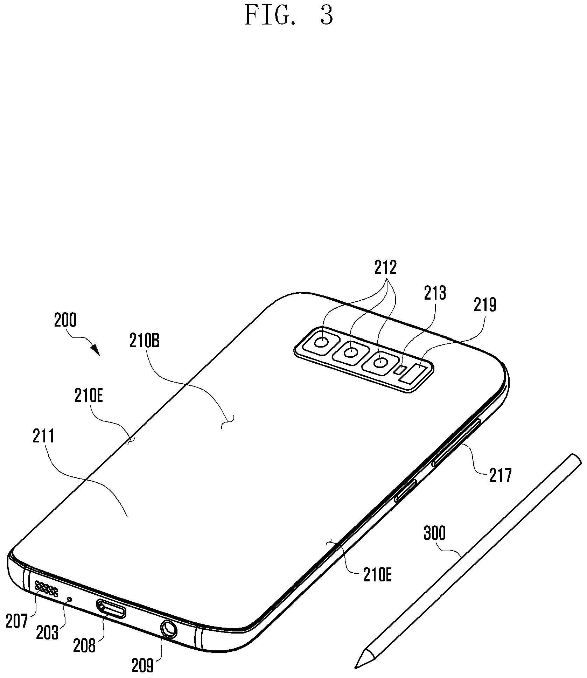

According to an embodiment, an electronic device 101 may include a display module 160 and an electronic pen (e.g., stylus pen) (e.g., the electronic pen 300 in FIGS. 2 and 3). For example, the display module 160 may include a flexible display configured to be foldable or expandable. For example, the display module 160 may include a display (e.g., the display 410 in FIG. 4), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer drive unit (e.g., the digitizer drive unit 470 in FIG. 4).

According to an embodiment, the display module 160 may include a flexible display disposed to be slidable and providing a screen (e.g., display screen), a display driver IC (e.g., the display driver IC 430 in FIG. 4), a touch circuit (e.g., the touch circuit 450 in FIG. 4), a digitizer (e.g., the digitizer 460 in FIGS. 2 and 4), and a digitizer drive unit (e.g., the digitizer drive unit 470 in FIG. 4).

FIG. 2 is a perspective view of a first surface (e.g., a front surface) of an electronic device according to an embodiment of the disclosure. FIG. 3 is a perspective view of a second surface (e.g., a rear surface) of an electronic device according to an embodiment of the disclosure.

Referring to FIGS. 2 and 3, an electronic device 200 (e.g., the electronic device 101 in FIG. 1) according to an embodiment of the disclosure may include a first surface (or front surface) 210A, a second surface (or rear surface) 210B, and a housing 210.

The electronic device 200 (e.g., the electronic device 101 in FIG. 1) according to an embodiment of the disclosure may include a display 201, a display driver IC (e.g., the display driver IC 430 in FIG. 4), a touch circuit (e.g., the touch circuit 450 in FIG. 4), a digitizer 460 (e.g., the digitizer 460 in FIG. 4), a digitizer drive unit (e.g., the digitizer drive unit 470 in FIG. 4), and an electronic pen 300 (e.g., stylus pen).

According to an embodiment, the display 201 may be supported by the housing 210. For example, the display 201 may include a liquid crystal display (LCD), an organic light-emitting diode (OLED) display, or a micro-LED display.

According to an embodiment, the housing 210 may include a side surface 210C that surrounds the space between the first surface 210A and the second surface 210B. According to an embodiment, the housing 210 may refer to a structure forming a part of the first surface 210A, the second surface 210B, and the side surface 210C.

According to an embodiment, the first surface 210A may be configured as a front plate 202 (e.g., a glass plate or polymer plate including various coating layers) having at least a portion that is substantially transparent.

According to an embodiment, the second surface 210B may be configured as a substantially opaque rear plate 211. The rear plate 211 may be formed of, for example, coated or tinted glass, ceramic, polymer, metal (e.g., aluminum, stainless steel (STS), or magnesium), or a combination of at least two of these materials. However, it is not limited thereto, and the rear plate 211 may also be formed of transparent glass.

According to an embodiment, the side surface 210C may be formed in a lateral bezel structure 218 (or "lateral member") (or "lateral frame") that is coupled to the front plate 202 and the rear plate 211 and includes metal and/or polymer.

According to an embodiment, the rear plate 211 and the lateral bezel structure 218 may be integrally formed, and may include the same material (e.g., metal material such as aluminum).

According to an embodiment, the front plate 202 may include two first regions 210D that curve from the first surface 210A toward the rear plate 211 to extend seamlessly. The two first regions 210D may be disposed at both ends of a long edge of the front plate 202.

According to an embodiment, the rear plate 211 may include two second regions 210E that curve from the second surface 210B toward the front plate 202 to extend seamlessly.

According to an embodiment, the front plate 202 (or the rear plate 211) may include only one of the first regions 210D (or the second regions 210E). According to an embodiment, some of the first regions 210D or the second regions 210E may be excluded.

In embodiments, when viewed from the side of the electronic device 200, the lateral bezel structure 218 may have a first thickness (or width) at a side where the first regions 210D or the second regions 210E are not provided as described above. In embodiments, when viewed from the side of the electronic device 200, the lateral bezel structure 218 may have a second thickness (or width) less than the first thickness at a side where the first regions 210D or the second regions 210E are provided.

According to an embodiment, the electronic device 200 may include at least one or more of a display 201, an audio input device 203 (e.g., the input module 150 in FIG. 1 or microphones), audio output devices 207 and 214 (e.g., the audio output module 155 in FIG. 1 or speakers) (e.g., audio module), sensor modules 204 and 219 (e.g., the sensor module 176 in FIG. 1), camera modules 205 and 212 (e.g., the camera module 180 in FIG. 1), a flash 213, a key input device 217, an indicator (not shown), and connectors 208 and 209.

According to an embodiment, the electronic device 200 may exclude at least one (e.g., the key input device 217) of the components or further include other components.

According to an embodiment, the display 201 may be visually observable through the upper portion of the front plate 202.

According to an embodiment, at least a portion of the display 201 may be visible through the front plate 202 forming the first surface 210A and the first region 210D of the side surface 210C. For example, the display 201 may be combined with a touch sensing circuit, a pressure sensor capable of measuring the intensity (pressure) of a touch, and/or a digitizer (e.g., the digitizer 460 in FIG. 4) for detecting an electronic pen 300 (e.g., stylus pen) operating in a magnetic field manner. For example, the display 201 may be disposed adjacent to the digitizer 460 for detecting an electronic pen 300 (e.g., stylus pen) operating in a magnetic field manner.

For example, a touch sensor (e.g., the touch sensor 451 in FIG. 4) may be disposed on the upper side (e.g., top side) of the display 201 in the z-axis direction. For example, the digitizer 460 may be disposed on the lower side (e.g., bottom side) of the display 201 in the z-axis direction.

According to an embodiment, at least some of the sensor modules 204 and 219 and/or at least a part of the key input device 217 may be disposed in the first region 210D and/or the second region 210E.

According to an embodiment, the back side of a display area of the display 201 may include at least one of a first sensor module 204, camera modules 205 and 212 (e.g., image sensor and image sensor driving circuit), an audio output device 214 (e.g., audio module), and a fingerprint sensor.

According to an embodiment, the display 201 may be combined with or disposed adjacent to a touch sensing circuit and a pressure sensor capable of measuring the intensity (pressure) of a touch.

According to an embodiment, the display 210 may be combined with or disposed adjacent to a digitizer 460 that detects an electronic pen (e.g., stylus pen) operating in a magnetic field manner.

According to an embodiment, at least some of the sensor modules 204 and 219 and/or at least a part of key input device 217 may be disposed in the first regions 210D and/or the second regions 210E.

According to an embodiment, the audio input device 203 may include a microphone. According to an embodiment, the audio input device 203 may include a plurality of microphones disposed to detect the direction of sound.

According to an embodiment, the audio output devices 207 and 214 may include an audio output device 207 that operates as an external speaker and an audio output device 214 that operates as a receiver for calls.

In some embodiments, the audio input device 203 (e.g., microphone), the audio output devices 207 and 214, and the connectors 208 and 209 may be disposed inside the electronic device 200. The audio input device 203 (e.g., microphone), the audio output devices 207 and 214, and the connectors 208 and 209 may be exposed to the external environment through at least one hole formed in the housing 210. In some embodiments, the hole formed in the housing 210 may be used commonly for the audio input device 203 (e.g., microphone) and the audio output devices 207 and 214. In some embodiments, the audio output devices 207 and 214 may include a speaker (e.g., piezo speaker) that operates without a hole formed in the housing 210.

According to an embodiment, the electronic pen 300 (e.g., stylus pen) may be stored in the internal space of the electronic device 200. The electronic pen 300 may be inserted and disposed on one side of the space of the electronic device 200. The electronic pen 300 may be inserted (e.g., slide in) or removed (e.g., slide out) through a pen hole (not shown) formed on the side surface of the electronic device 200. The electronic pen 300 (e.g., stylus pen) may be removed (e.g., slide out) from the interior to the exterior of the electronic device 200 for use. The electronic pen 300 (e.g., stylus pen) may be inserted into (e.g., slide into) the interior of the electronic device 200 when not in use.

According to an embodiment, the electronic pen 300 (e.g., stylus pen) may be magnetically attached to one surface (e.g., front surface, rear surface, or side surface) of the electronic device 200.

According to an embodiment, the sensor modules 204 and 219 (e.g., the sensor module 176 in FIG. 1) may generate an electrical signal or data value corresponding to the operating state inside the electronic device 200 or the external environmental state. The sensor modules 204 and 219 may include a first sensor module 204 (e.g., proximity sensor) disposed on the first surface 210A of the housing 210, and/or a second sensor module 219 (e.g., HRM sensor) and/or a third sensor module (not shown) (e.g., fingerprint sensor) disposed on the second surface 210B of the housing 210. For example, the fingerprint sensor may be disposed on the first surface 210A (e.g., the display 201) and/or the second surface 210B of the housing 210.

The electronic device 200 may further include at least one of a gesture sensor, a gyro sensor, an atmosphere pressure sensor, a magnetic sensor (e.g., geomagnetic sensor), a 6-axis sensor, an acceleration sensor, a grip sensor, a color sensor, an infrared (IR) sensor, a biometric sensor, a temperature sensor, a humidity sensor, and/or an illuminance sensor.

According to an embodiment, the camera modules 205 and 212 may include a first camera module 205 disposed on the first surface 210A of the electronic device 200, and a second camera module 212 disposed on the second surface 210B. The flash 213 may be disposed around the camera modules 205 and 212. The camera modules 205 and 212 may include one or more lenses, an image sensor, and/or an image signal processor. The flash 213 may include, for example, a light-emitting diode or a xenon lamp.

According to an embodiment, the first camera module 205 may be disposed under the display panel of the display 201 in an under-display camera (UDC) manner. According to an embodiment, two or more lenses (wide-angle and telephoto lenses) and image sensors may be disposed on one side of the electronic device 200. According to an embodiment, a plurality of first camera modules 205 may be disposed on the first surface (for example, the surface where a screen is displayed) of the electronic device 200 in an under-display camera (UDC) manner.

According to an embodiment, the key input device 217 may be disposed on the side surface 210C of the housing 210. According to an embodiment, the electronic device 200 may exclude the entirety or part of the aforementioned key input device 217, and the excluded key input device 217 may be implemented in other forms such as a soft key on the display 201. According to an embodiment, the key input device 217 may be implemented using a pressure sensor included in the display 201.

According to an embodiment, the connectors 208 and 209 may include a first connector hole 208 capable of receiving a connector (e.g., USB connector) for transmitting and receiving power and/or data to and from an external electronic device, and/or a second connector hole 209 (or earphone jack) capable of receiving a connector for transmitting and receiving audio signals to and from an external electronic device. The first connector hole 208 may include a port of a universal serial bus (USB) type A or USB type C. If the first connector hole 208 supports USB type C, the electronic device 200 (e.g., the electronic device 101 in FIG. 1) may support USB power delivery (PD) charging.

According to an embodiment, at least first camera module 205 among the camera modules 205 and 212 and/or the first sensor module 204 among the sensor modules 204 and 219 may be disposed to be visually observable through the display 201.

According to an embodiment, in the case where the first camera module 205 is disposed in an under-display camera (UDC) manner, the first camera module 205 may not be visually observable from the outside.

According to an embodiment, the first camera module 205 may be disposed to overlap the display area, and a screen may also be displayed in the display area corresponding to the first camera module 205. The first sensor module 204 may be disposed in the internal space of the electronic device 200 to perform its functions without being visually exposed through the front plate 202.

FIG. 4 is a block diagram illustrating the configuration of an electronic device according to an embodiment.

Referring to FIG. 4, an electronic device 400 according to an embodiment of the disclosure may include a processor 120 (e.g., the processor 120 in FIG. 1), a memory 130 (e.g., the memory 130 in FIG. 1), a sensor module 176, and a display module 160 (e.g., the display module 160 in FIG. 1).

According to an embodiment, the memory 130 (e.g., the memory 130 in FIG. 1) may include at least one of high-bandwidth memory (HBM), dynamic random-access memory (DRAM), static random-access memory (SRAM), phase-change random-access memory (PRAM), magnetic random-access memory (MRAM), resistive random-access memory (RRAM), flash memory, and/or electrically erasable programmable read-only memory (EEPROM).

According to an embodiment, the display module 160 (e.g., the display module 160 in FIG. 1) may include a display 410, a display driver IC (hereinafter referred to as "DDIC") 430 (e.g., the display drive unit) for driving the display 410, a touch circuit 450, a digitizer 460, a digitizer drive unit 470, and a sensor module 176 (e.g., the sensor module 176 in FIG. 1). For example, the entirety or part of the sensor module 176 may be included in the display module 160.

According to an embodiment, the DDIC 430 may include an interface module 431 (e.g., interface circuit), a memory 433 (e.g., buffer memory), an image processing module 435 (e.g., image processing circuit), or a mapping module 437 (e.g., mapping circuit).

According to an embodiment, the DDIC 430 may receive image information including image data or image control signals corresponding to commands for controlling the image data from other components of the electronic device (e.g., the electronic device 101 in FIG. 1 or the electronic device 200 in FIGS. 2 and 3) through the interface module 431.

According to an embodiment, the image information may be received from the processor 120 (e.g., the processor 120 in FIG. 1) (e.g., the main processor 121 in FIG. 1) (e.g., application processor) or an auxiliary processor (e.g., the auxiliary processor 123 in FIG. 1) (e.g., graphics processing unit) that operates independently of the functions of the main processor 121.

According to an embodiment, the DDIC 430 may communicate with the touch circuit 450 or the sensor module 176 through the interface module 431. In addition, the DDIC 430 may store at least some of the received image information in the memory 433. For example, the DDIC 430 may store at least some of the received image information in units of frames in the memory 433.

According to an embodiment, the image processing module 435 may perform preprocessing or post-processing (e.g., resolution, brightness, or size adjustment) on at least some of the image data, based at least on characteristics of the image data or display 410.

According to an embodiment, the mapping module 437 may generate a voltage value or a current value corresponding to the image data pre-processed or post-processed through the image processing module 435. According to an embodiment, the generation of the voltage value or current value may be performed at least partially based on, for example, the properties of the pixels of the display 410 (e.g., the arrangement of the pixels (RGB stripe or pentile structure) or the size of each subpixel).

According to an embodiment, at least some pixels of the display 410 may be driven at least partially based on, for example, the voltage value or current value, so that visual information (e.g., text, images, or icons) corresponding to the image data may be displayed through the display 410.

According to an embodiment, the touch circuit 450 may include a touch sensor 451 and a touch sensor integrated circuit (IC) 453 for controlling the touch sensor 451.

According to an embodiment, the touch sensor IC 453 may control the touch sensor 451 to detect a touch input or hovering input onto a specific position on the display 410. For example, the touch sensor IC 453 may detect a touch input or hovering input by measuring a change in the signal (e.g., voltage, light amount, resistance, or charge amount) at a specific position on the display 410. The touch sensor IC 453 may provide information (e.g., position, area, pressure, or time) about the detected touch input or hovering input to a processor (e.g., the processor 120 in FIG. 1).

According to an embodiment, at least a part (e.g., the touch sensor IC 453) of the touch circuit 450 may be included as a part of the DDIC 430 or the display 410.

According to an embodiment, at least a part (e.g., the touch sensor IC 453) of the touch circuit 450 may be included as a part of another component (e.g., the auxiliary processor 123) disposed outside the display module 160.

According to an embodiment, the display module 160 may further include at least one sensor (e.g., fingerprint sensor, iris sensor, pressure sensor, or illuminance sensor) of the sensor module 176, or a control circuit thereof. In this case, the at least one sensor or its control circuit may be embedded in a part (e.g., the display 410 or the DDIC 430) of the display module 160 or a part of the touch circuit 450.

For example, in the case where the sensor module 176 embedded in the display module 160 includes a biometric sensor (e.g., fingerprint sensor), the biometric sensor may acquire biometric information (e.g., fingerprint image) associated with a touch input through a partial area of the display 410.

For example, in the case where the sensor module 176 embedded in the display module 160 includes a pressure sensor, the pressure sensor may acquire pressure information associated with a touch input through a partial or entire area of the display 410.

According to an embodiment, the touch sensor 451 or the sensor module 176 may be disposed between the pixels of the pixel layer of the display 410, or above or below the pixel layer of the display 410.

According to an embodiment, the display module 160 may include a digitizer 460 for detecting an input (e.g., touch input or hovering input) of the electronic pen 300 (e.g., the electronic pen 300 in FIG. 2 or a stylus pen). For example, the digitizer 460 may convert analog coordinates (e.g., position) of the electronic pen 300 (e.g., stylus pen) into digital coordinate data. The digitizer 460 may provide the digital coordinate data to the processor 120 and/or the DDIC 430.

According to an embodiment, the processor 120 may acquire the digital coordinate data input from the digitizer 460. The processor 120 may detect an input (e.g., touch input or hovering input) using the electronic pen 300 (e.g., stylus pen), based on the digital coordinate data. For example, the digitizer 460 may include a plurality of x-axis channels and a plurality of y-axis channels. The processor 120 may sense the position of the electronic pen 300 (e.g., stylus pen) using sensing signals (e.g., electromagnetic resonance (EMR) signals) received from the x-axis channels and y-axis channels disposed in the digitizer 460. For example, the digitizer 460 may have a plurality of x-axis channels and a plurality of y-axis channels sequentially arranged, and the processor 120 may sense the position of the electronic pen 300 (e.g., stylus pen) using sensing signals (e.g., EMR signals) received from three consecutive channels (e.g., three adjacent channels).

According to an embodiment, the digitizer 460 may not be visible from the outside due to the display 410, electronic components, and mechanical structures.

For example, the digitizer 460 may be disposed integrally with the flat display 410, or may be disposed adjacent to the flat display 410. For example, when the digitizer 460 is applied to the flat display 410, the digitizer 460 may include a single electromagnetic resonance (EMR) sheet (or EMR film). The single EMR sheet may have a plurality of x-axis channels and a plurality of y-axis channels disposed to detect the position of the electronic pen 300.

For example, the digitizer 460 may be disposed integrally with a flexible display or a foldable display, or may be disposed adjacent to the flexible display or the foldable display. For example, the digitizer 460 may be disposed below the display 410 (e.g., the display 201 in FIGS. 2 and 3) in the z-axis direction (e.g., the z-axis direction in FIGS. 2 and 3).

For example, in the case where the digitizer 460 is applied to the flexible display or the foldable display, the digitizer 460 may include a plurality of electromagnetic resonance (EMR) sheets (or EMR films). The plurality of EMR sheets may have a plurality of x-axis channels and a plurality of y-axis channels disposed to detect the position of the electronic pen 300.

According to an embodiment, the processor 120 may control the operation of the digitizer drive unit 470. The digitizer drive unit 470 may supply current to the digitizer 460, based on the control of the processor 120. Current may be supplied from the digitizer drive unit 470 to the digitizer 460, thereby generating an electromagnetic field (EM field). The electromagnetic field may be transmitted to the electronic pen 300 (e.g., stylus pen), thereby inducing primary resonance and generating a primary resonance signal.

For example, when the current supplied to the digitizer 460 is cut off, the primary resonance signal induced in the electronic pen 300 (e.g., stylus pen) may be maintained for a certain period and then gradually attenuate. The residual primary resonance signal that has been induced and then attenuated in the electronic pen 300 (e.g., stylus pen) may induce secondary resonance in the digitizer 460, thereby generating a secondary resonance signal. The digitizer drive unit 470 may measure current (or voltage) induced by the secondary resonance signal, thereby detecting the coordinates (e.g., position) of the electronic pen 300 (e.g., stylus pen). The digitizer drive unit 470 may provide information about the coordinates (e.g., position) of the electronic pen 300 (e.g., stylus pen) to the processor 120.

For example, the digitizer drive unit 470 that drives the digitizer 460 may be included as a component of the display module 160. For example, the digitizer drive unit 470 may be included as a separate component from the display module 160.

According to an embodiment, the electronic pen 300 (e.g., stylus pen) may include, in addition to the EMR type (or EMR passive type), an active electrostatic solution (AES) type (or AES active type) and an electric coupled resonance (ECR) type.

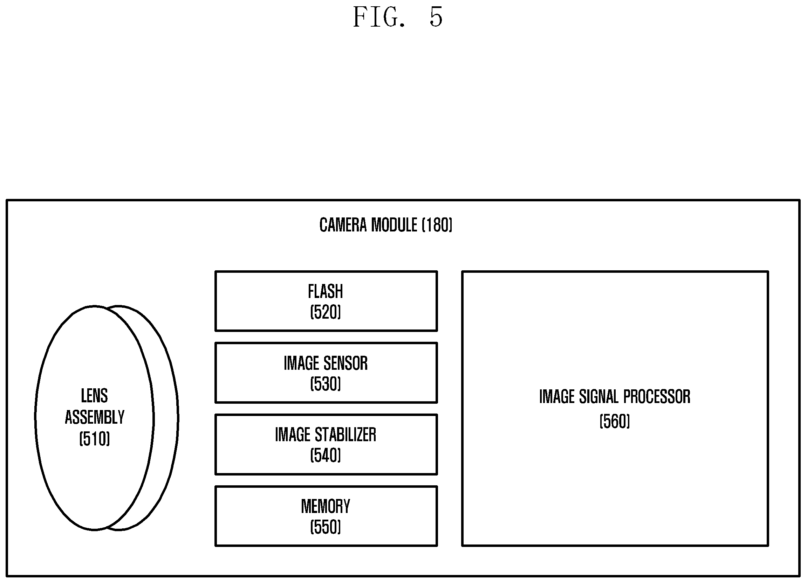

FIG. 5 is a block diagram of a camera module according to an embodiment of the disclosure.

Referring to FIG. 5, a camera module 180 (e.g., the camera module 180 in FIG. 1) may include a lens assembly 510, a flash 520, an image sensor 530, an image stabilizer 540, a memory 550 (e.g., buffer memory), or an image signal processor 560.

According to an embodiment, the lens assembly 510 may collect light emitted from a subject that is the target of image capture. The lens assembly 510 may include one or more lenses.

According to an embodiment, the camera module 180 may include a plurality of lens assemblies 510. For example, the camera module 180 may configure a dual camera, a 360-degree camera, or a spherical camera. For example, some of the plurality of lens assemblies 510 may have the same lens properties (e.g., angle of view, focal length, autofocus, f-number, and/or optical zoom). For example, at least one lens assembly may have one or more lens properties different from those of another lens assembly. For example, the lens assembly 510 may include a wide-angle lens or a telephoto lens.

According to an embodiment, the flash 520 may emit light used to enhance light emitted or reflected from a subject. According to an embodiment, the flash 520 may include one or more light-emitting diodes (e.g., RGB (red-green-blue) LED, white LED, infrared LED, or ultraviolet LED) or xenon lamps.

According to an embodiment, image sensor 530 may convert light emitted or reflected from the subject and transmitted through the lens assembly 510 into an electrical signal, thereby obtaining an image corresponding to the subject. For example, the image sensor 530 may include one image sensor selected from among different types of image sensors such as an RGB sensor, a black-and-white (BW) sensor, an IR sensor, and a UV sensor, a plurality of image sensors with the same properties, or a plurality of image sensors with different properties. For example, each image sensor included in the image sensor 530 may be implemented using a charged coupled device (CCD) sensor or a complementary metal oxide semiconductor (CMOS) sensor.

According to an embodiment, the image stabilizer 540 may react to the movement of the camera module 180 or the electronic device (e.g., the electronic device 101 in FIG. 1 or the electronic device 200 in FIG. 2) including the camera module, thereby moving at least one lens included in the lens assembly 510 or the image sensor 530 in a specific direction or controlling the operating characteristics (e.g., adjusting read-out timing) of the image sensor 530. This compensates for at least some of the image shake caused by the movement of the captured image.

According to an embodiment, the image stabilizer 540 may detect the movement of the camera module 180 or the electronic device 101 or 200 using a gyro sensor (not shown) or an acceleration sensor (not shown) disposed inside or outside the camera module 180.

According to an embodiment, the memory 550 may temporarily store at least part of the image acquired through the image sensor 530 for subsequent image processing operations. For example, when image acquisition is delayed due to a shutter or when a plurality of images are rapidly acquired, an acquired original image (e.g., Bayer-patterned image or high-resolution image) may be stored in the memory 550, and a corresponding copy image (e.g., lower-resolution image) may be previewed through the display module 160. Afterwards, when specified conditions are met (e.g., user input or system command), at least part of the original image stored in the memory 550 may be obtained and processed by the image signal processor 560. According to an embodiment, the memory 550 may be configured as at least a part of the memory 130 or as a separate memory operating independently thereof.

According to an embodiment, the image signal processor 560 may perform one or more image processing operations on images acquired through the image sensor 530 or images stored in the memory 550. The one or more image processing operations may include, for example, depth map generation, three-dimensional modeling, panorama generation, feature point extraction, image synthesis, or image compensation (e.g., noise reduction, resolution adjustment, brightness adjustment, blurring, sharpening, or softening).

For example, the image signal processor 560 may perform control (e.g., exposure time control, read-out timing control, and the like) on at least one (e.g., the image sensor 530) of the components included in the camera module 180. The image processed by the image signal processor 560 may be re-stored in the memory 550 for additional processing or provided to external components (e.g., the memory 130, the display module 160, external electronic devices (e.g., the electronic device 102 and the electronic device 104 in FIG. 1), or external servers (e.g., the server 108 in FIG. 1)) of the camera module 180.

According to an embodiment, the image signal processor 560 may be configured as at least part of the processor 120 or as a separate processor operating independently of the processor 120. In the case where the image signal processor 560 is configured as a separate processor from the processor 120, at least one image processed by the image signal processor 560 may be displayed through the display module 160 as it is or after undergoing additional image processing by the processor 120.

According to an embodiment, the electronic device 101 may include a plurality of camera modules 180 having different properties (e.g., angle of view) or functions. In this case, for example, the plurality of camera modules 180 may include at least one of a wide-angle camera, a telephoto camera, or an IR camera (e.g., time-of-flight (ToF) camera or structured light camera). For example, a plurality of camera modules including lenses with different angles of view may be configured, and the electronic device 101 or 200 may be controlled to variably change the angle of view according to user selection.

According to an embodiment, at least one of the plurality of camera modules 180 may be a front camera, and at least one other may be a rear camera.

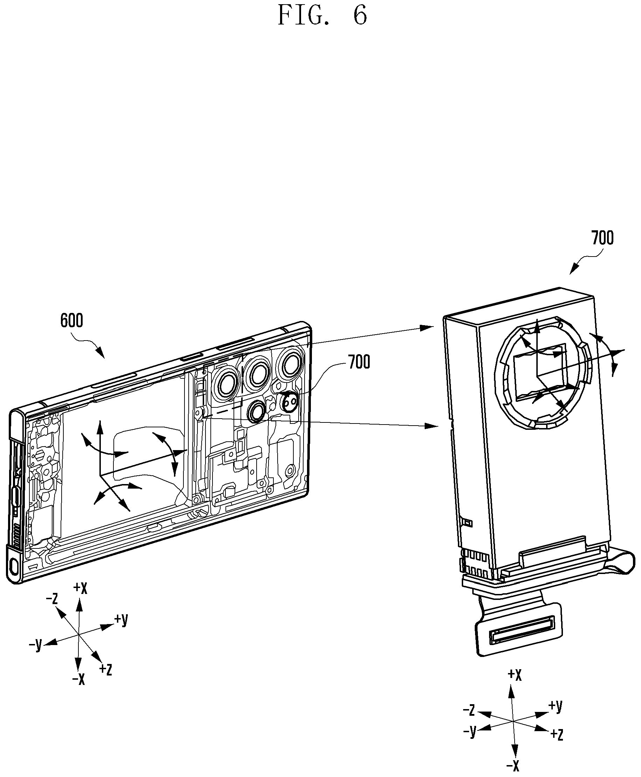

FIG. 6 is a drawing illustrating a camera module disposed in an electronic device according to an embodiment of the disclosure.

Referring to FIGS. 5 and 6, an electronic device 600 according to an embodiment of the disclosure may include a camera module 700 (e.g., the camera module 212 in FIG. 3).

According to an embodiment, for example, the camera module 700 may include a lens assembly 510, a flash 520, an image sensor 530, an OIS actuator (e.g., the image stabilizer 540) for driving the optical image stabilizer (OIS), an AF actuator for driving autofocus, a memory 550, and an image signal processor 560.

According to an embodiment, the camera module 700 (e.g., rear camera module) may be disposed to capture images in the rear direction of the electronic device 600. For example, light incident on the camera module 700 from the outside of the electronic device 600 may enter the interior through the lens assembly 510. The light introduced into the camera module 700 may be sensed through the image sensor 530.

According to an embodiment, the camera module 700, under the control of the processor (e.g., the processor 120 in FIG. 1), may perform an autofocus (AF) function of automatically adjusting the focus of the lens on a subject outside the electronic device 600 by moving the lens assembly 510 relative to the image sensor 530.

According to an embodiment, the lens drive unit may drive an AF actuator to move along the optical axis of the lenses with respect to the image sensor 530.

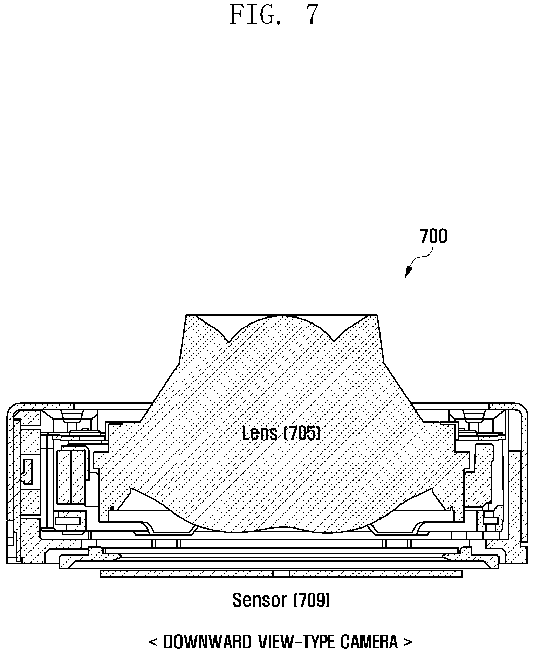

FIG. 7 is a drawing illustrating a downward view-type camera module according to an embodiment of the disclosure.

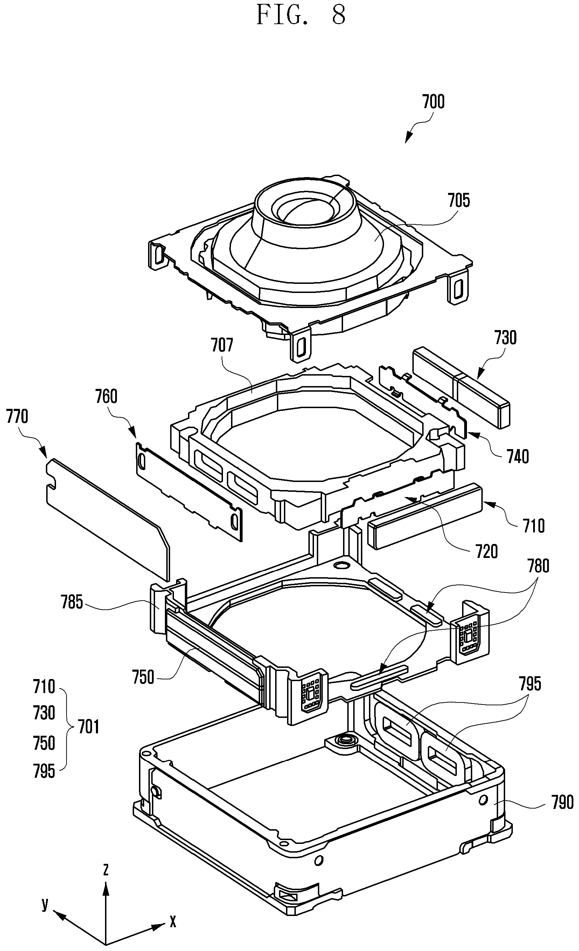

FIG. 8 is a perspective view of a downward view-type camera module according to an embodiment of the disclosure.

Referring to FIGS. 7 and 8, a downward view-type camera module 700 according to an embodiment of the disclosure comprises a lens module 705 and an image sensor 709, which are disposed in a vertical direction (e.g., the z-axis direction).

For example, the downward view-type camera module 700 may be disposed in the rear direction (e.g., the +z-axis direction) of an electronic device (e.g., the electronic device 600 in FIG. 6) so as to capture images in the rear direction (e.g., the +z-axis direction) of the electronic device 600.

According to an embodiment, the downward view-type camera module 700 may include a carrier 707 (OIS carrier) where components for OIS are disposed, a coil 795, an AF carrier 785, an AF suction yoke 770, an OIS suction yoke 780, and a housing 790 where an flexible printed circuits board (FPCB) is disposed.

According to an embodiment, the downward view-type camera module 700 may move components of the lens module 705 and the prism for camera shake prevention and autofocus, wherein actuator 701 may include a plurality of permanent magnets 710, 730, and 750, and coils 795.

For example, the plurality of permanent magnets 710, 730, and 750 may include a first permanent magnet 710 (OIS x-axis permanent magnet) for movement of the OIS in the x-axis direction, a second permanent magnet 730 (OIS y-axis permanent magnet) for movement of the OIS in the y-axis direction, and a third permanent magnet 750 (AF permanent magnet) for AF.

For example, the OIS suction yoke 780 may serve to prevent the OIS carrier 707 and the AF carrier 785 from moving away from each other and allow smooth movement between them by a ball guide. In addition, the AF suction yoke 770 may absorb leakage magnetic flux directed in the x-axis direction (or y-axis direction) of the permanent magnet 710, and 730.

For example, the coil 795 may be disposed to be in contact with the inner wall of the housing 790. For example, the permanent magnets 710, 730, and 750 may be disposed to come into contact with the carrier of the object (e.g., lens and/or prism of the lens module) to be moved.

According to an embodiment, the downward view-type camera module 700 may include a first back yoke 720 (OIS back yoke) binding the first permanent magnet 710 (OIS x-axis permanent magnet), a second back yoke 740 (OIS back yoke) binding the second permanent magnet 730 (OIS y-axis permanent magnet), a third back yoke 760 (AF back yoke) binding the third permanent magnet 750 (AF permanent magnet), and OIS suction yokes 780.

For example, the OIS suction yoke 780 may serve to draw, or suck, the OIS carrier 707 toward the AF carrier 785 (e.g., pulling the OIS permanent magnets 710 and 730 downward). The AF suction yoke 770 may draw, or suck, the OIS carrier 707 toward the AF carrier 785. For example, the OIS suction yokes 780 may pull the carrier 707 (OIS carrier) downward along the z-axis direction (e.g., in the -z direction). The OIS suction yokes 780 may absorb (e.g., shield) leakage magnetic flux from the first permanent magnet 710 (OIS x-axis permanent magnet) and the second permanent magnet 730 (OIS y-axis permanent magnet). For example, the OIS suction yokes 780 may reduce shaking (e.g., tilting) in a direction different from the OIS movement direction.

For example, in order to increase the coupling force between the permanent magnets 710, 730, and 750 and the body of the actuator 701, the first back yoke 720 (OIS back yoke), the second back yoke 740 (OIS back yoke), and the third back yoke 760 (AF back yoke) may be disposed. For example, the first back yoke 720 (OIS back yoke), the second back yoke 740 (OIS back yoke), and the third back yoke 760 (AF back yoke) may include a magnetic material.

For example, the suction yokes 780 may be disposed to absorb (e.g., shield) leakage magnetic flux from the permanent magnets 710, 730, and 750 and to control a tilt and center shift of the lens 705.

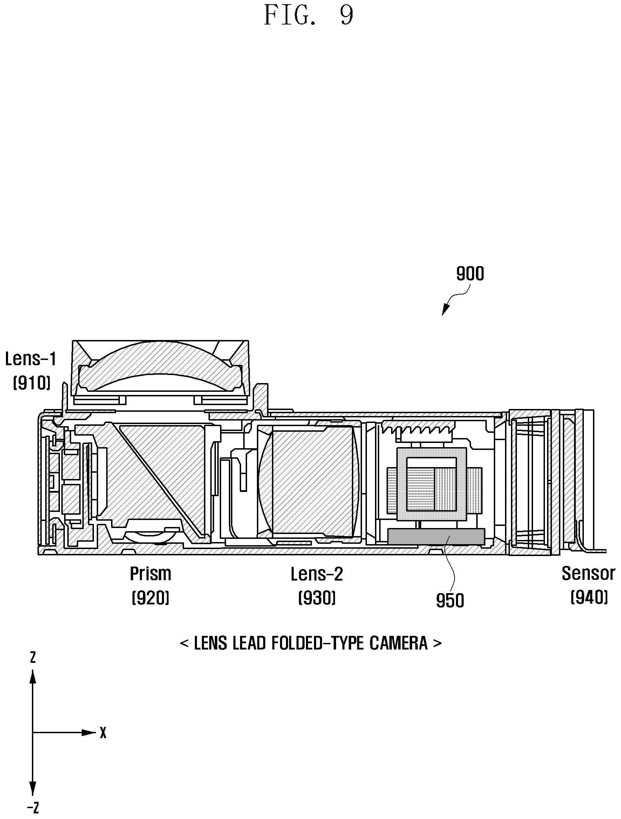

In the case of the downward view-type camera module 700 shown in FIG. 8, since the image sensor is positioned between the display and lens drive unit, the gap therebetween may increase relatively. A lens lead folded-type camera module 900 shown in FIG. 9 has a structure in which the image sensor is disposed to be perpendicular to the lens, and the drive unit is positioned closer to the display, which may increase interference caused by magnetic flux.

The downward view-type camera module 700 according to an embodiment of the disclosure may reduce the intensity of leakage magnetic flux directed downward (e.g., toward the digitizer and/or the display) inside the camera module 700 using the back yokes 720, 740, and 760 and the suction yokes 780.

An electronic device (e.g., the electronic device 101 in FIG. 1, the electronic device 200 in FIG. 2, or the electronic device 600 in FIG. 6) including the downward view-type camera module 700 according to an embodiment of the disclosure may reduce the intensity of leakage magnetic flux directed from the camera module toward the digitizer and the display, thereby blocking (or reducing) the influence on the operation of electronic components disposed inside the electronic device.

FIG. 9 is a drawing illustrating a lens lead folded-type camera module according to an embodiment of the disclosure.

Referring to FIG. 9, a lens lead folded-type camera module 900 according to an embodiment of the disclosure may include a first lens 910, a prism 920, a second lens 930, and an image sensor 940.

According to an embodiment, the lens lead folded-type camera module 900 may have the first lens 910 and second lens 930 disposed in a bent manner (e.g., disposed at about 90 degrees therebetween) around the prism 920, which may be useful for extending or enlarging the focal length.

For example, the thickness of the camera module 900 may be reduced due to the first lens 910 disposed externally, and the AF drive unit may move further downward, which may increase leakage magnetic flux compared to conventional structures. By disposing a suction yoke 950 in such a camera module structure, shielding of leakage magnetic flux may be improved. The AF carrier (e.g., the part where the second lens 930 is mounted) may be pulled in the -z-axis direction by the suction yoke 950.

The lens lead folded-type camera module 900 has optical members such as the prism 920, enabling free design or arrangement of the first lens 910 and second lens 930, regardless of the direction in which external light is incident. Therefore, the lens lead folded-type camera module 900 may easily extend the focal length. The lens lead folded-type camera module 900 may include an optical image stabilizer to improve the quality of a captured image, and the performance of the telephoto camera for capturing distant subjects may be significantly enhanced when combined with a shake compensation function.

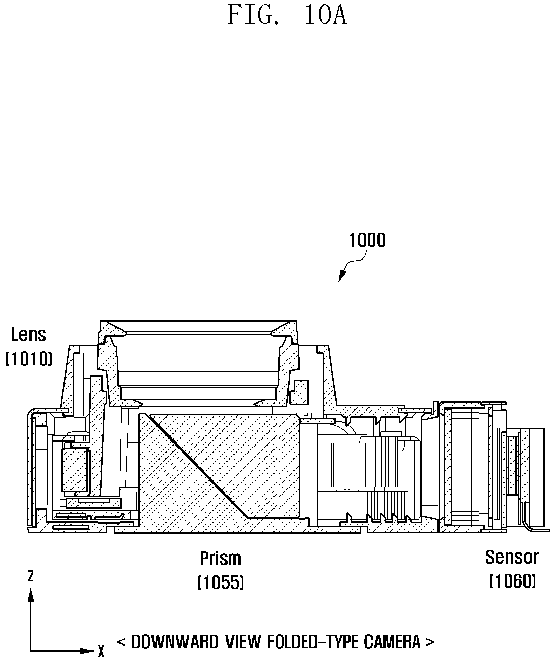

FIGS. 10A to 10C are drawings illustrating a downward view folded-type camera module according to an embodiment of the disclosure.

Referring to FIGS. 10A to 10C, a downward view folded-type camera module 1000 according to an embodiment of the disclosure may include a lens 1010, a prism 1055, and an image sensor 1060.

According to an embodiment, the downward view folded-type camera module 1000 may include a first carrier 1030 (e.g., OIS carrier), a second carrier 1040 (e.g., AF carrier), back yokes 1070 (e.g., OIS back yokes) disposed in the first carrier 1030, a plurality of permanent magnets 1080 (e.g., OIS permanent magnets), suction yokes 1090 (e.g., OIS suction yokes) disposed in the second carrier 1040, a housing 1050, and a coil 1020 disposed in the housing 1050.

According to an embodiment, the downward view folded-type camera module 1000 may be disposed in the rear direction (e.g., the +z-axis direction) of an electronic device (e.g., the electronic device 600 in FIG. 6) so as to capture images in the rear direction (e.g., the +z-axis direction) of the electronic device 600.

According to an embodiment, the downward view folded-type camera module 1000 may have a prism 1055 disposed between the lens 1010 and the image sensor 1060, so that the thickness thereof may be reduced compared to the downward view-type camera module (e.g., the downward view-type camera module 700 in FIG. 7). The downward view folded-type camera module 1000 may have the lens 1010 and the image sensor 1060 disposed in a bent manner (e.g., disposed at about 90 degrees therebetween), which may be useful for extending or enlarging the focal length.

According to an embodiment, in the case where the downward view folded-type camera module 1000 has an additional prism and a reflective member, the image sensor 1060 may be disposed downward.

According to an embodiment, the downward view folded-type camera module 1000 may move components of the lens 1010 and the prism 1055 for camera shake prevention and autofocus, wherein the actuator may include a plurality of permanent magnets 1080 (e.g., OIS permanent magnets) and a coil 1020.

According to an embodiment, the permanent magnets 1080 (e.g., OIS permanent magnets) for OIS may be disposed in the first carrier 1030 (e.g., OIS carrier).

According to an embodiment, the back yokes 1070 (e.g., OIS back yokes) may be disposed in the first carrier 1030 (e.g., OIS carrier) to bind the permanent magnets 1080 (e.g., OIS permanent magnets).

For example, the back yokes 1070 (e.g., OIS back yokes) may include a magnetic material.

According to an embodiment, the suction yokes 1090 (e.g., OIS suction yokes) may be disposed in the second carrier 1040 (e.g., AF carrier) to absorb (e.g., shield) leakage magnetic flux of the permanent magnets 1080 (e.g., OIS permanent magnets).

For example, the suction yokes 1090 (e.g., OIS suction yokes) may be disposed to be spaced a predetermined distance apart from each other below the permanent magnets 1080 (e.g., OIS permanent magnets) and the back yokes 1070 (e.g., OIS back yokes) (e.g., in the -z direction).

The downward view folded-type camera module 1000 according to an embodiment of the disclosure may reduce the intensity of leakage magnetic flux directed downward (e.g., toward the digitizer or the display) inside the camera module using the back yokes 1070 (e.g., OIS back yokes) and the suction yokes 1090 (e.g., OIS suction yokes).

An electronic device (e.g., the electronic device 101 in FIG. 1, the electronic device 200 in FIG. 2, or the electronic device 600 in FIG. 6) including the downward view folded-type camera module 1000 according to an embodiment of the disclosure may reduce the intensity of leakage magnetic flux directed from the camera module toward the digitizer and the display, thereby blocking (or reducing) the influence on the operation of electronic components disposed inside the electronic device.

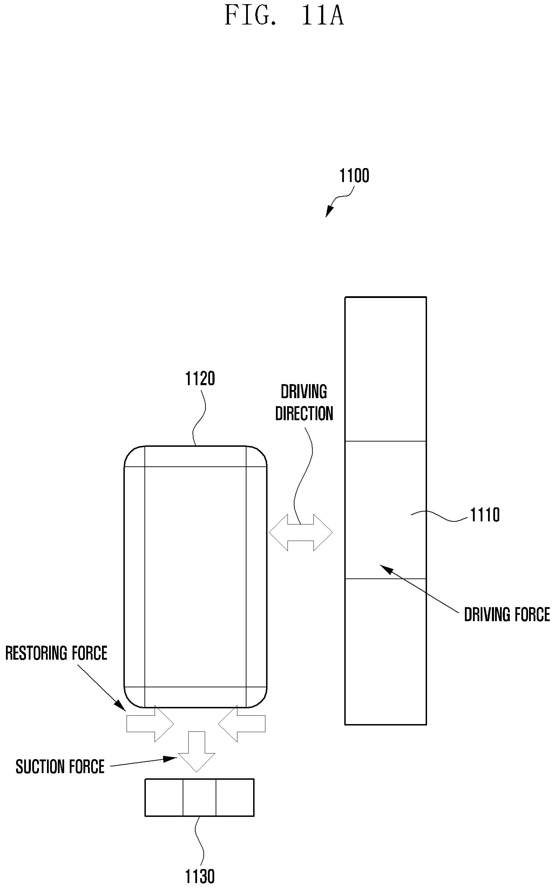

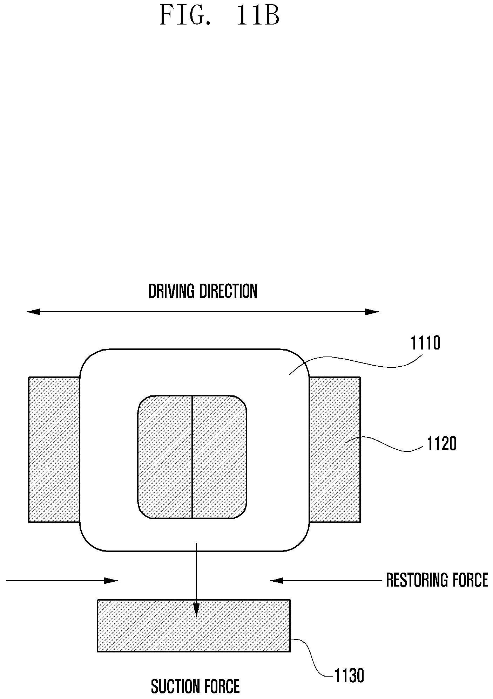

FIGS. 11A and 11B are drawings 1100 illustrating control of a tilt and center shift of a permanent magnet relative to a coil using a suction yoke disposed in a camera module.

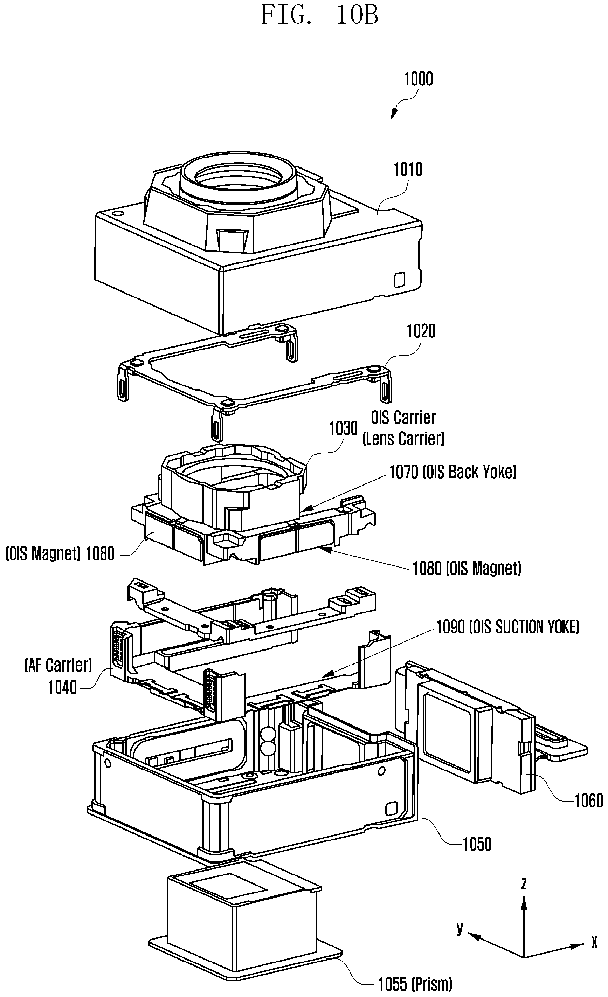

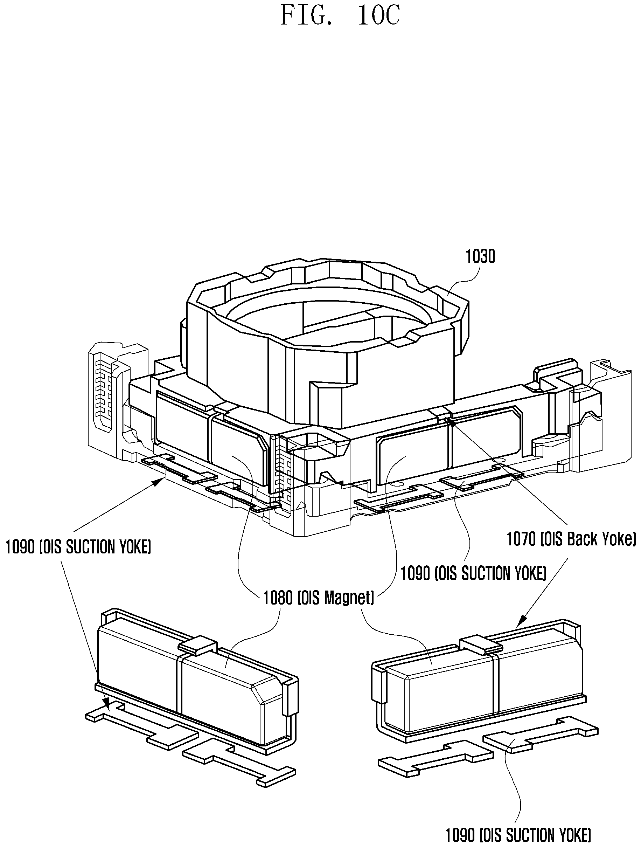

Referring to FIG. 11A, a suction yoke 1130 (e.g., the suction yokes 1090 in FIGS. 10B and 10C or OIS suction yokes) may absorb (e.g., shield) leakage magnetic flux of a permanent magnet 1120 (e.g., the permanent magnets 1080 in FIGS. 10B and 10C or OIS permanent magnets) and control the tilt and center shift of the permanent magnet relative to a coil 1110.

FIGS. 11A and 11B show an example of a solenoid drive method. For example, the structure where the suction yoke 1130 (e.g., the suction yokes 1090 in FIGS. 10B and 10C or OIS suction yokes) is disposed may be applied similarly (or identically) to the solenoid drive method.

For example, in a camera mounted to the electronic devices (e.g., smartphones), the solenoid drive method and the Lorentz drive method may be applied to move a lens precisely for implementation of autofocus (AF) and optical image stabilization (OIS) functions. For example, the solenoid drive method uses electromagnetic force, where current flows through a coil (solenoid) to generate a magnetic field and the lens may be moved through interaction with a permanent magnet. In the solenoid drive method, by controlling the direction and intensity of the current, the position of the lens may be adjusted. The force generated in the solenoid drive method may be determined depending on the direction of the magnetic field and the polarity of the magnet attached to the lens. By reversing the direction of the current flowing through the coil, the polarity of the magnetic field may be changed, so that the lens position may shift in the z-axis (or -z-axis) direction. For example, the Lorentz drive method uses Lorentz force, which is an electromagnetic force generated when current flows in a magnetic field, thereby moving the lens. In the Lorentz drive method, since the direction of current (coil) and the direction of the magnetic field (permanent magnet) are perpendicular to each other, the Lorentz force may act perpendicularly to both the current direction and the magnetic field direction. Thus, the lens may move freely in the x-axis and y-axis plane directions, thereby implementing the OIS function. The Lorentz drive method may enable camera shake compensation and autofocus by moving the lens in the x-axis, y-axis, and z-axis directions. The Lorentz drive method may finely adjust the lens position by controlling the direction and magnitude of the current. For example, when the x-axis and y-axis of the drive unit for adjusting the lens position are switched, the suction yoke 1130 may also be applied to the AF drive unit. For example, the solenoid drive method generates driving force in the direction where the distance between the coil and the magnet changes, and the Lorentz drive method generates driving force in the lateral direction while the distance between the coil and the magnet is maintained. The drive unit for performing x-axis control in the solenoid drive method may be applied as the drive unit for performing y-axis control in the Lorentz drive method.

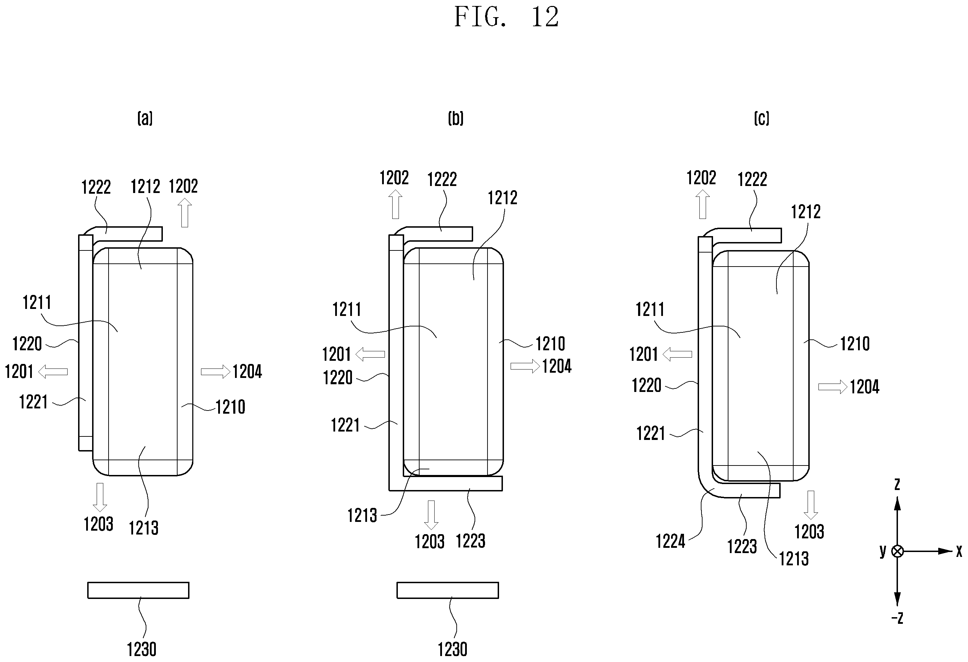

FIG. 12 is a drawing illustrating a back yoke binding a permanent magnet, and a suction yoke absorbing leakage magnetic flux of a permanent magnet in a camera module according to an embodiment of the disclosure.

Referring to FIG. 12A, a back yoke 1220 (e.g., the back yokes 1070 in FIG. 10) is disposed to surround at least a portion of the sides (e.g., to surround two sides) of a permanent magnet 1210 (e.g., the permanent magnets 1080 in FIG. 10). For example, the back yoke 1220 may include a first portion 1221 and a second portion 1222.

For example, a suction yoke 1230 is disposed below the permanent magnet 1210 (e.g., in the -z-axis direction), and the suction yoke 1230 and the back yoke 1220 may be arranged not to overlap each other.

According to an embodiment, the back yoke 1220 may be disposed to overlap two sides of the permanent magnet 1210. For example, in the first lateral direction 1201, the first portion 1221 of the back yoke 1220 may be disposed to overlap (e.g., to surround) the first side 1211 of the permanent magnet 1210. For example, in the second lateral direction 1202, the second portion 1222 of the back yoke 1220 may be disposed to overlap (e.g., to surround) the second side 1212 of the permanent magnet 1210. The back yoke 1220 may not overlap the permanent magnet 1210 in the third lateral direction 1203 and the fourth lateral direction 1204.

Referring to FIG. 12B, the back yoke 1220 may be disposed to overlap three sides of the permanent magnet 1210. For example, the back yoke 1220 (e.g., the back yoke 1070 in FIG. 10) may be disposed to surround at least a portion of the sides (e.g., to surround three sides) of the permanent magnet 1210 (e.g., the permanent magnets 1080 in FIG. 10). For example, the back yoke 1220 may include a first portion 1221, a second portion 1222, and a third portion 1223.

The suction yoke 1230 may be disposed below the permanent magnet 1210 (e.g., in the -z-axis direction), and the suction yoke 1230 and the back yoke 1220 may be arranged to at least partially overlap each other.

According to an embodiment, the first portion 1221, the second portion 1222, and third portion 1223 of the back yoke 1220 may be disposed to surround three sides 1211, 1212, and 1213 of the permanent magnet 1210 (e.g., the permanent magnets 1080 in FIG. 10). For example, in the first lateral direction 1201, the first portion 1221 of the back yoke 1220 may be disposed to overlap the first side 1211 of the permanent magnet 1210. For example, in the second lateral direction 1202, the second portion 1222 of the back yoke 1220 may be disposed to overlap the second side 1212 of the permanent magnet 1210. For example, in the third lateral direction 1203, the third portion 1223 of the back yoke 1220 may be disposed to overlap the third side 1213 of the permanent magnet 1210. For example, the back yoke 1220 may not overlap the permanent magnet 1210 in the fourth lateral direction 1204.

Referring to FIG. 12C, the back yoke 1220 (e.g., the back yokes 1070 in FIG. 10) may be disposed to surround at least a portion of the sides (e.g., to surround three sides) of the permanent magnet 1210. For example, the back yoke 1220 may include a first portion 1221, a second portion 1222, and a third portion 1223.

According to an embodiment, the first portion 1221, the second portion 1222, and the third portion 1223 of the back yoke 1220 may be disposed to surround three sides 1211, 1212, and 1213 of the permanent magnet 1210. For example, in the first lateral direction 1201, the first portion 1221 of the back yoke 1220 may be disposed to overlap the first side 1211 of the permanent magnet 1210. For example, in the second lateral direction 1202, the second portion 1222 of the back yoke 1220 may be disposed to overlap a portion of the second side 1212 of the permanent magnet 1210. For example, in the third lateral direction 1203, the third portion 1223 of the back yoke 1220 may be disposed to overlap a portion of the third side 1213 of the permanent magnet 1210. For example, the back yoke 1220 may not overlap the permanent magnet 1210 in the fourth lateral direction 1204. For example, the back yoke 1220 may include a bending portion 1224 at the corner of the permanent magnet 1210 where the back yoke 1220 may be bent. The bending portion 1224 may be formed by C-cut or R shaping.

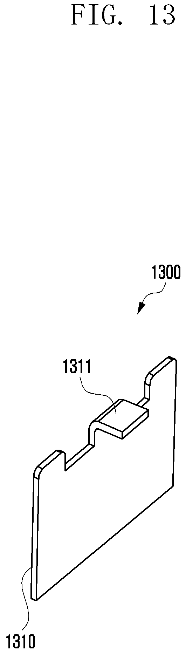

FIGS. 13 to 15 are drawings illustrating various shapes of a back yoke of a camera module according to an embodiment of the disclosure.

Referring to FIG. 13, a camera module (e.g., the camera module 700 in FIG. 8 or the camera module 1000 in FIG. 10B) according to an embodiment of the disclosure may include a plurality of the back yokes 1300. FIG. 13 shows one of the plurality of the back yokes 1300.

According to an embodiment, the back yoke 1300 includes a first surface 1310 that comes into contact with a permanent magnet (e.g., the permanent magnet 1210 in FIG. 12), and a protrusion 1311 protruding from the upper portion of the first surface 1310 in a direction perpendicular thereto (e.g., bent at approximately 90 degrees).

For example, the protrusion 1311 of the back yoke 1300 may overlap a portion of the upper surface of the permanent magnet (e.g., the permanent magnet 1210) (e.g., to cover a portion of the upper surface of the permanent magnet).

For example, the permanent magnet (e.g., the permanent magnet 1210) may be bound by the first surface 1310 and the protrusion 1311 of the back yoke 1300.

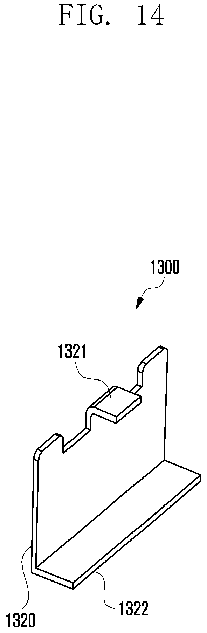

Referring to FIG. 14, a camera module (e.g., the camera module 700 in FIG. 8 or the camera module 1000 in FIG. 10B) according to an embodiment of the disclosure may include a plurality of the back yokes 1300. FIG. 14 shows one of the plurality of the back yokes 1300.

According to an embodiment, the back yoke 1300 includes a first surface 1320 that comes into contact with a permanent magnet (e.g., the permanent magnet 1210), and a first protrusion 1322 protruding from the lower portion of the first surface 1320 in a direction substantially perpendicular thereto (e.g., bent at approximately 90 degrees). For example, the back yoke 1300 may include a second protrusion 1321 protruding from the upper portion of the first surface 1320 in a direction substantially perpendicular thereto (e.g., bent at approximately 90 degrees).

For example, the first protrusion 1322 of the back yoke 1300 may overlap a portion of the lower surface of the permanent magnet (e.g., the permanent magnet 1210) (e.g., to cover a portion of the lower surface of the permanent magnet).

For example, the second protrusion 1321 of the back yoke 1300 may overlap a portion of the upper surface of the permanent magnet (e.g., the permanent magnet 1210) (e.g., to cover a portion of the upper surface of the permanent magnet).

For example, the permanent magnet (e.g., the permanent magnet 1210) may be bound by the first surface 1320, the first protrusion 1322, and the second protrusion 1321 of the back yoke 1300.

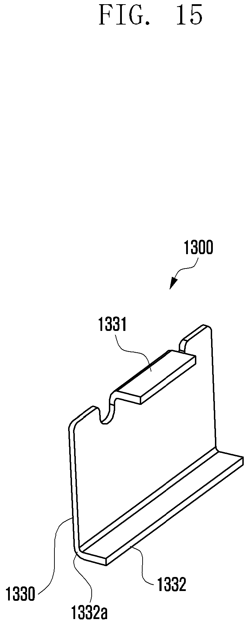

Referring to FIG. 15, a camera module (e.g., the camera module 700 in FIG. 8 or the camera module 1000 in FIG. 10B) according to an embodiment of the disclosure may include a plurality of the back yokes 1300. FIG. 15 shows one of the plurality of the back yokes 1300.

According to an embodiment, the back yoke 1300 includes a first surface 1330 that comes into contact with a permanent magnet (e.g., the permanent magnet 1210), and a first protrusion 1332 protruding from the upper portion (or lower portion) of the first surface 1330 in a direction substantially perpendicular thereto (e.g., bent at approximately 90 degrees). For example, the back yoke 1300 may include a second protrusion 1331 protruding from the lower portion (or upper portion) of the first surface 1330 in a direction substantially perpendicular thereto (e.g., bent at approximately 90 degrees).

For example, the first protrusion 1332 of the back yoke 1300 may overlap a portion of the lower surface of the permanent magnet (e.g., the permanent magnet 1210) (e.g., to cover a portion of the lower surface of the permanent magnet). For example, a portion 1332a where the first surface 1330 and the first protrusion 1332 of the back yoke 1300 are connected may be formed in a rounded shape.

For example, the second protrusion 1331 of the back yoke 1300 may overlap a portion of the upper surface of the permanent magnet (e.g., the permanent magnet 1210) (e.g., to cover a portion of the upper surface of the permanent magnet). The area of the second protrusion 1331 in FIG. 15 may be greater than that of the second protrusion 1321 in FIG. 14, and the greater area of the second protrusion 1331 may overlap the upper surface of the permanent magnet 1210.

For example, the permanent magnet (e.g., the permanent magnet 1210) may be bound by the first surface 1330, the first protrusion 1332, and the second protrusion 1331 of the back yoke 1300.

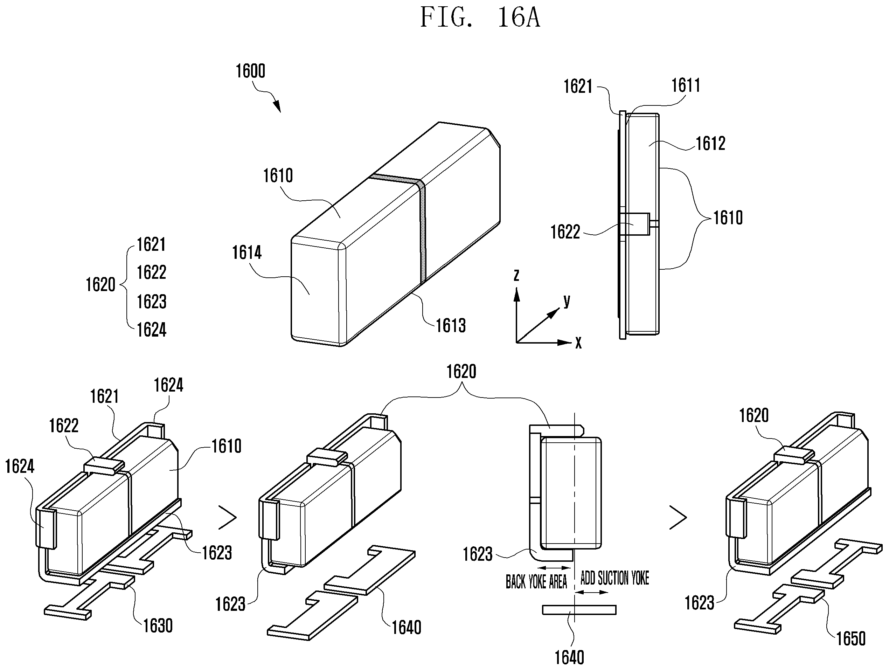

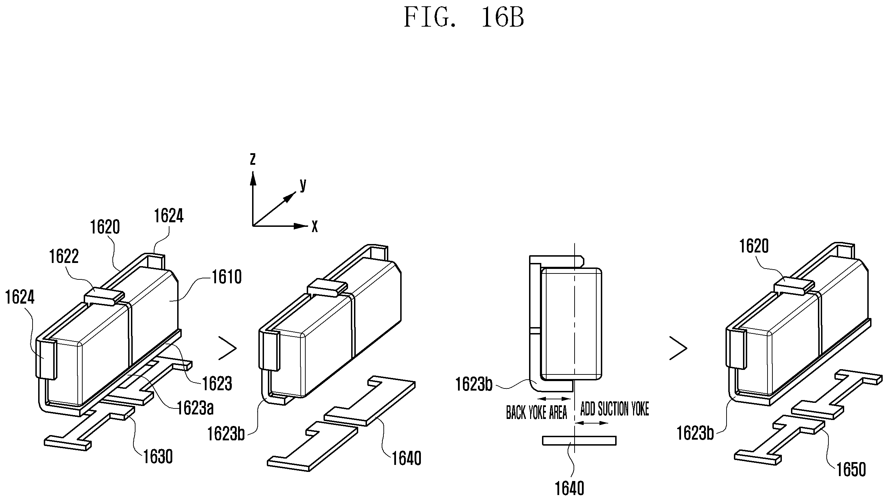

FIGS. 16A and 16B are drawings 1600 illustrating shielding of leakage magnetic flux using a back yoke and a suction yoke of a camera module according to an embodiment of the disclosure.

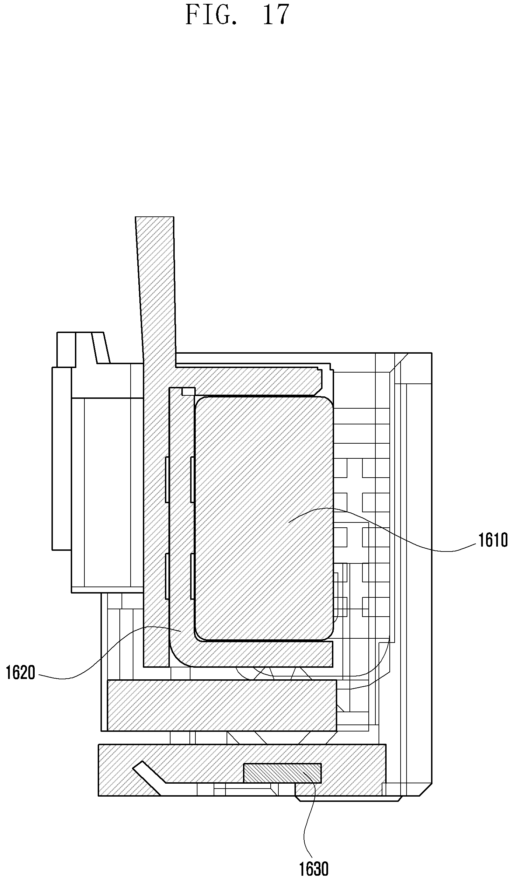

FIG. 17 is a cross-sectional view illustrating the permanent magnet, the back yoke, and the suction yoke shown in FIGS. 16A and 16B.

Referring to FIGS. 16A, 16B, and 17, a camera module (e.g., the camera module 700 in FIG. 8 or the camera module 1000 in FIG. 10B) according to an embodiment of the disclosure may include a plurality of the permanent magnets 1610, a plurality of the back yokes 1620, and a plurality of suction yokes 1630, 1640, and 1650. FIGS. 16A, 16B, and 17 illustrate one of the plurality of the permanent magnets 1610. FIGS. 16A, 16B, and 17 illustrate one of the plurality of the back yokes 1620.

According to an embodiment, a first surface 1621 of the back yoke 1620 is formed to come into contact with a first surface 1611 of the permanent magnet 1610.

For example, the back yoke 1620 includes a first protrusion 1623 (e.g., lower protrusion) protruding from the lower portion of the first surface 1621 in a direction substantially perpendicular thereto (e.g., bent at approximately 90 degrees). The first protrusion 1623 of the back yoke 1620 is formed to at least partially overlap the lower surface 1613 of the permanent magnet 1610.

For example, the back yoke 1620 may include a second protrusion 1622 (e.g., upper protrusion) protruding from the upper portion of the first surface 1621 in a direction substantially perpendicular thereto (e.g., bent at about 90 degrees). The second protrusion 1622 of the back yoke 1620 may be formed to at least partially overlap the upper surface 1612 of the permanent magnet 1610.

For example, the back yoke 1620 may include a third protrusion 1624 that protrudes from the first surface 1621 to overlap the side surfaces 1614 (e.g., both sides) of the permanent magnet 1610. The third protrusion 1624 may be positioned between the first protrusion 1623 and the second protrusion 1622.

According to an embodiment, suction yokes 1630, 1640, and 1650 are disposed below the permanent magnet 1610 and the back yoke 1620.

The suction yokes 1630, 1640, and 1650 may be formed in various shapes when viewed from above. For example, the suction yokes 1630, 1640, and 1650 may be formed in various shapes, such as an "I" shape, an "H" shape, or a combination of the "I" shape and the "H" shape, when viewed from above. However, the suction yokes 1630, 1640, and 1650 are not limited thereto, and may be formed in various shapes other than the "I" shape and the "H" shape when viewed from above.

For example, the suction yokes 1630, 1640, and 1650 are positioned to overlap a portion of the first protrusion 1623 of the back yoke 1620 in the z-axis direction.

For example, the suction yokes 1630, 1640, and 1650 may be positioned to overlap the entirety of the first protrusion 1623 of the back yoke 1620. For example, when viewed in the z-axis direction, the suction yokes 1630, 1640, and 1650 may overlap at least a portion of the first protrusion 1623 of the back yoke 1620.

According to an embodiment, the performance of absorbing (e.g., shielding) the leakage magnetic flux of the permanent magnet 1610 may vary depending on the size (e.g., area) of the suction yoke 1630, 1640, or 1650.

As illustrated in FIG. 16B, for example, the first protrusion 1623a may be formed to provide 100% shielding for the lower portion of the back yoke 1620. In this case, the suction yoke 1630 may be disposed to overlap the first protrusion 1623a of the back yoke 1620 in the z-axis direction. Here, the area of the suction yoke 1630 is less than the area of the first protrusion 1623a of the back yoke 1620. By adjusting the position of the suction yoke 1630, the area where the first protrusion 1623a of the back yoke 1620 and the suction yoke 1630 overlap may be adjusted.

For example, the first protrusion 1623b may be formed to shield 40% to 60% of the lower portion of the back yoke 1620. In this case, the suction yoke 1640 may be disposed to overlap the first protrusion 1623b of the back yoke 1620 in the z-axis direction. Here, the area of the suction yoke 1640 is greater than the area of the first protrusion 1623b of the back yoke 1620. By adjusting the position of the suction yoke 1640, the area where the first protrusion 1623b of the back yoke 1620 and the suction yoke 1640 overlap may be adjusted.

For example, the first protrusion 1623b may be formed to shield 40% to 60% of the lower portion of the back yoke 1620. In this case, the suction yoke 1630 may be disposed to overlap the first protrusion 1623b of the back yoke 1620 in the z-axis direction. Here, the area of the suction yoke 1630 may be substantially the same as or less than the area of the first protrusion 1623a of the back yoke 1620. By adjusting the position of the suction yoke 1630, the area where the first protrusion 1623b of the back yoke 1620 and the suction yoke 1630 may be adjusted.

Referring to Table 1 below, it may be confirmed that as the size (e.g., area) of the suction yoke 1630, 1640, or 1650 increases, the performance of absorbing (e.g., shielding) the leakage magnetic flux of the permanent magnet 1610 substantially increases.

The sizes (e.g., areas) of the suction yokes 1630, 1640, and 1650 shown in Table 1 are relative values. When the size (e.g., area) of the suction yoke 1630, 1640, or 1650 is 0.1605, the leakage magnetic flux of the permanent magnet 1610 may be 223 and the suction force may be 1.7. Relatively, when the size (e.g., area) of the suction yoke 1630, 1640, or 1650 is 1.445, the leakage magnetic flux of the permanent magnet 1610 may decrease to 168 and the suction force may increase to 63.

**[Table 1]**

| - Sucction yoke size dependence | | |
|---|---|---|
| Suction yoke size | Leakage flux [Gauss] | Suction force [mN] |
| 0.1605 | 223 | 1.7 |
| 0.321 | 216 | 7.0 |
| 0.4815 | 213 | 12.9 |
| 0.8025 | 193 | 28.2 |
| 1.1235 | 186 | 45.8 |
| 1.4445 | 168 | 63 |

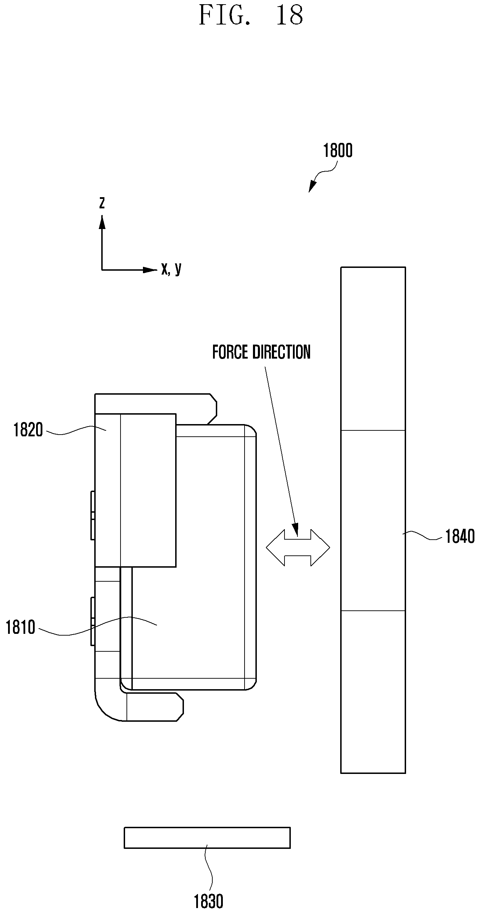

FIG. 18 is a drawing illustrating an OIS drive unit using the solenoid force. Referring to FIG. 18, a camera module (e.g., the camera module 700 in FIG. 8 or the camera module 1000 in FIG. 10B) according to an embodiment of the disclosure may include an OIS drive unit 1800.

According to an embodiment, an OIS drive unit 1800 using the solenoid force may include a plurality of the permanent magnets 1810 (e.g., OIS permanent magnets), a plurality of back yokes 1820 (e.g., AF back yokes), a plurality of suction yokes 1830, and a plurality of coils 1840. For example, the OIS drive unit 1800 using the solenoid force may include an x-axis permanent magnet and an x-axis coil for driving in the x-axis direction. The OIS drive unit 1800 using the solenoid force may include a y-axis permanent magnet and a y-axis coil for driving in the y-axis direction. For example, the OIS drive unit 1800 using the solenoid force may apply a force to the permanent magnet 1810 and the coil 1840 in a horizontal direction.

For example, FIG. 18 illustrates one permanent magnet 1810 among the plurality of permanent magnets 1810. FIG. 18 illustrates one back yoke 1820 among the plurality of the back yokes 1820. FIG. 18 illustrates one suction yoke 1830 among the plurality of suction yokes 1830.

According to an embodiment, the back yoke 1820 may be disposed to be in contact with the permanent magnet 1810 so as to bind the permanent magnet 1810.

According to an embodiment, the suction yoke 1830 may be disposed below the permanent magnet 1810 and the back yoke 1820 (e.g., in the z-axis direction) to be spaced a predetermined distance apart from them.

The camera module (e.g., the camera module 700 in FIG. 8 or the camera module 1000 in FIG. 10B) according to an embodiment of the disclosure may have the OIS drive unit 1800 where the back yoke 1820 and the suction yoke 1830 are disposed, thereby absorbing (e.g., shielding) the leakage magnetic flux of the permanent magnet 1810 (e.g., AF permanent magnet) in the z-axis direction.

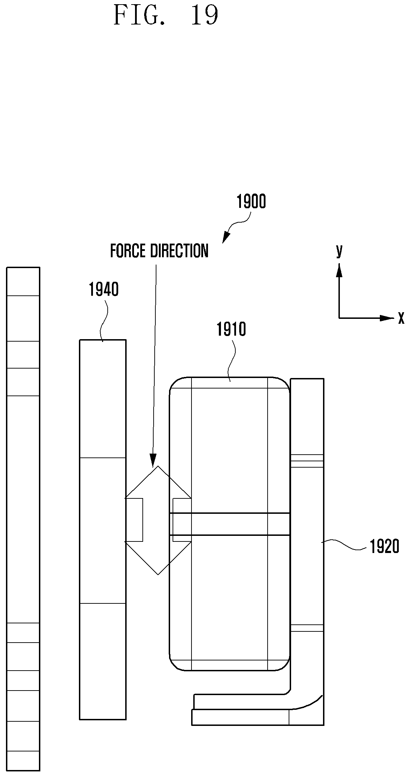

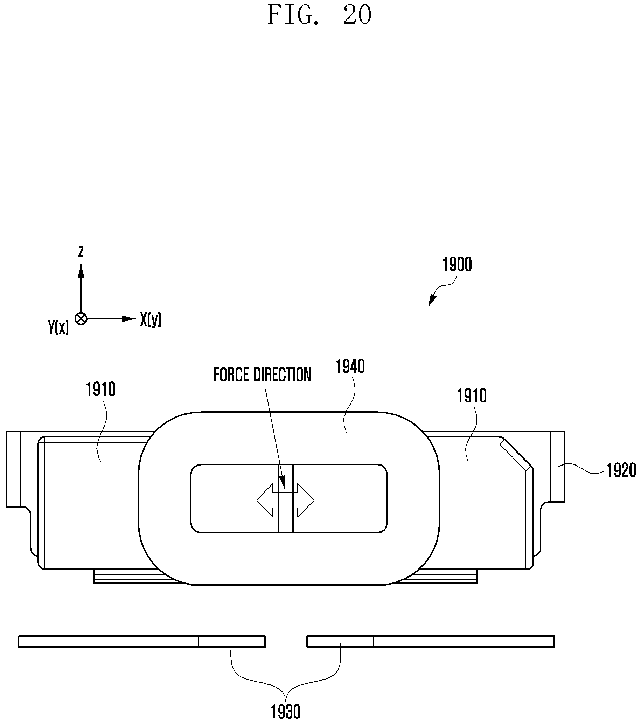

FIGS. 19 and 20 are drawings illustrating an OIS drive unit using Lorentz force.

A camera module (e.g., the camera module 700 in FIG. 8 or the camera module 1000 in FIG. 10B) according to an embodiment of the disclosure may include an OIS drive unit 1900 using the Lorentz force.

According to an embodiment, the OIS drive unit 1900 using the Lorentz force may include a plurality of permanent magnets 1910 (e.g., OIS permanent magnets), a plurality of back yokes 1920 (e.g., OIS back yokes), a plurality of suction yokes 1930 (e.g., the suction yokes 1090 in FIGS. 10B and 10C or OIS suction yokes), and a plurality of coils 1940. For example, the OIS drive unit 1900 using the Lorentz force may include an x-axis permanent magnet and an x-axis coil for driving in the x-axis direction. The OIS drive unit 1800 using the Lorentz force may include a y-axis permanent magnet and a y-axis coil for driving in the y-axis direction. Additionally, The OIS drive unit 1800 using the solenoid force may include a y-axis permanent magnet and a y-axis coil for driving in the y-axis direction.

For example, the OIS drive unit 1900 using the Lorentz force may apply a force to the permanent magnet 1910 and the coil 1940 in a vertical direction.

For example, FIGS. 19 and 20 illustrate one permanent magnet 1910 among the plurality of permanent magnets 1910. FIGS. 19 and 20 illustrate one back yoke 1920 among the plurality of back yokes 1920. FIGS. 19 and 20 illustrate two suction yokes 1930 among the plurality of suction yokes 1930.

According to an embodiment, the back yoke 1920 may be disposed to be in contact with the permanent magnet 1910 so as to bind the permanent magnet 1910.

According to an embodiment, the suction yoke 1930 may be disposed below the permanent magnet 1910 and the back yoke 1920 (e.g., in the z-axis direction) to be spaced a predetermined distance apart from them.

The camera module (e.g., the camera module 700 in FIG. 8 or the camera module 1000 in FIG. 10B) according to an embodiment of the disclosure may have the OIS drive unit 1900 where the back yoke 1920 and the suction yoke 1930 are disposed, thereby absorbing (e.g., shielding) the leakage magnetic flux of the permanent magnet 1910 (e.g., AF the permanent magnet) in the z-axis direction.

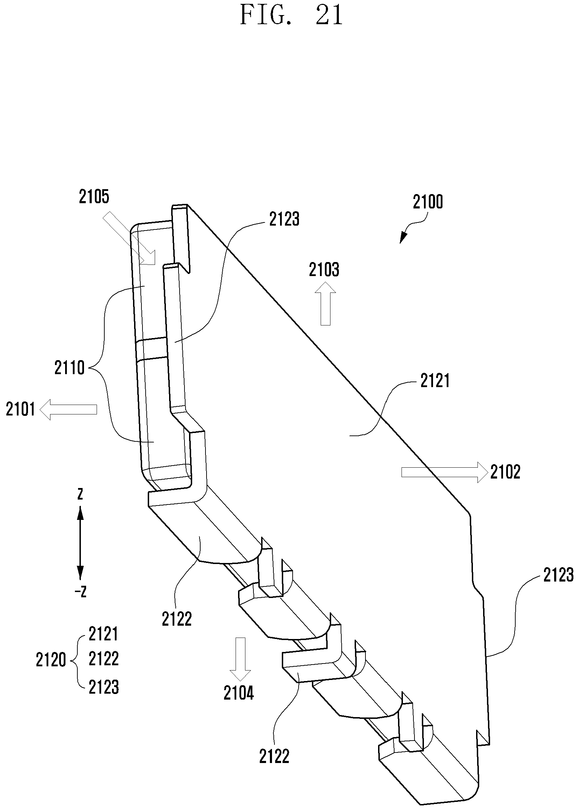

FIG. 21 is a drawing illustrating shielding of a permanent magnet by a back yoke of an AF drive unit.

Referring to FIG. 21, the leakage magnetic flux of a permanent magnet 2110 is shielded by a back yoke 2120 of an AF drive unit 2100.

According to an embodiment, the back yoke 2120 overlaps at least a portion of the back surface 2102, the upper surface 2103, the lower surface 2104, and the side surface 2105, excluding the front surface 2101, of the permanent magnet 2110.

For example, the back yoke 2120 includes a first surface 2121 (e.g., side surface) that overlaps the back surface 2102 of the permanent magnet 2110. The back yoke 2120 includes a first protrusion 2122 that overlaps at least a portion of the lower surface of the permanent magnet 2110. The back yoke 2120 may include a second protrusion 2123 that does not overlap the permanent magnet 2110. The first surface 2121 (e.g., side surface) of the back yoke 2120 and a plurality of protrusions 2122 may bind the permanent magnet 2110 and shield the leakage magnetic flux of the permanent magnet 2110.

For example, the first protrusion 2122 of the back yoke 2120 disposed to overlap the back surface 2102 of the permanent magnet 2110 shields the leakage magnetic flux of the permanent magnet 2110 in the downward direction (e.g., -z-axis direction). The number and shapes of the plurality of protrusions 2122 and 2123 of the back yoke 2120 may vary.

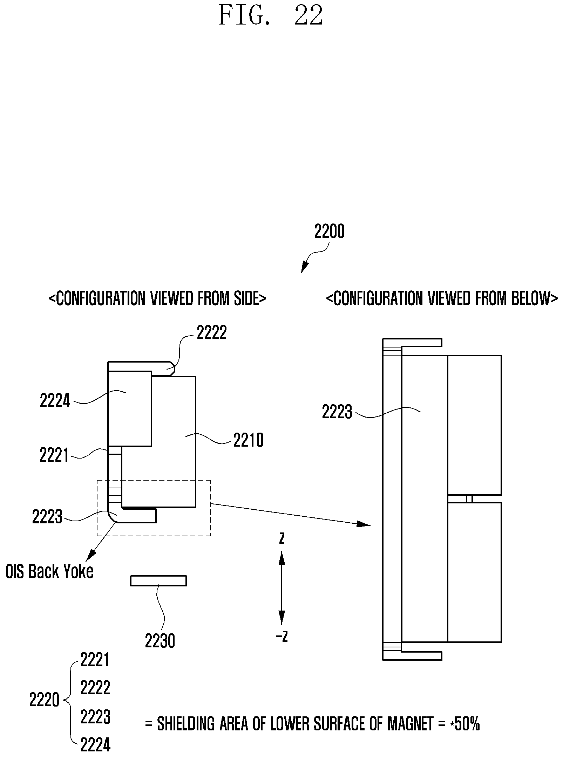

FIG. 22 is a drawing illustrating shielding of a designated area of a lower surface of a permanent magnet using a back yoke. FIG. 22 illustrates an example where 40% to 60% of the lower surface of the permanent magnet is shielded using a back yoke.

Referring to FIG. 22, a camera module (e.g., the camera module 700 in FIG. 8 or the camera module 1000 in FIG. 10B) according to an embodiment of the disclosure includes an OIS drive unit 2200 (or AF drive unit).

According to an embodiment, the OIS drive unit 2200 includes a permanent magnet 2210, a back yoke 2220, and a suction yoke 2230. The camera module (e.g., the camera module 700 in FIG. 8 or the camera module 1000 in FIG. 10B) according to an embodiment of the disclosure absorbs (e.g., shields) the leakage magnetic flux of the permanent magnet 2210 by disposing the back yoke 2220 and the suction yoke 2230.

For example, the back yoke 2220 is disposed to overlap at least a portion of the back, upper, and lower surfaces, excluding the front surface, of the permanent magnet 2210.

For example, the back yoke 2220 may include a first surface 2221 formed to be in contact with the back surface of the permanent magnet 2210.

The back yoke 2220 includes a first protrusion 2223 formed to protrude from the first surface 2221 in a direction substantially perpendicular thereto (e.g., to be bent at about 90 degrees) and overlap at least a portion of the lower surface of the permanent magnet 2210.

For example, the back yoke 2220 may include a second protrusion 2222 formed to protrude from the first surface 2221 in a direction substantially perpendicular thereto (e.g., to be bent at about 90 degrees) and overlap at least a portion of the upper surface of the permanent magnet 2210.

For example, the back yoke 2220 may include a third protrusion 2224 protruding from the first surface 2221 so as to overlap the side surface (e.g., both side surfaces) of the permanent magnet 2210. The third protrusion 2224 may be positioned between the first protrusion 2223 and the second protrusion 2222.

According to an embodiment, the suction yoke 2230 may be disposed below the permanent magnet 2210 and the back yoke 2220 to be spaced a predetermined distance apart from them.

According to an embodiment, the second protrusion 2222 of the back yoke 2220 may be formed to overlap about 25 to 50% of the total area of the upper surface of the permanent magnet 2210 that is in contact with the second protrusion 2222 of the back yoke 2220 on the surface perpendicular to the surface facing the coil. The first protrusion 2223 of the back yoke 2220 may be formed to overlap about 50% of the total area of the lower surface of the permanent magnet 2210 that is in contact with the first protrusion 2223 of the back yoke 2220 on a surface perpendicular to the surface facing the coil. In addition, the suction yoke 2230 may be disposed to absorb (e.g., shield) the leakage magnetic flux of the permanent magnet 2210. The first protrusion 2223, the second protrusion 2222, and the third protrusion 2224 of the back yoke 2220 may overlap at least a portion of the lower surface, the upper surface, and the side surface of the permanent magnet 2210, and the suction yoke 2230 is also disposed, thereby absorbing (e.g., shielding) the leakage magnetic flux of the permanent magnet 2210 in the -z-axis direction.

According to an embodiment, the back yoke 2220 and the suction yoke 2230 may be applied to the AF drive unit in the same (or similar) manner as the OIS drive unit 2200, thereby absorbing (e.g., shielding) the leakage magnetic flux of the permanent magnet.

Referring to Table 2 below, in the case where the area of the permanent magnet 2210 in contact with the protrusions 2222, 2223, and 2224 of the back yoke 2220 formed to overlap the permanent magnet 2210 on the surfaces perpendicular to the surface facing the coil is about 50% or more of the total area, as the size (e.g., area) of the suction yoke 2230 increases, the amount of leakage magnetic flux of the permanent magnet 2210 and the suction force (e.g., shielding) may increase. The sizes (e.g., area) of the suction yoke described in Table 2 are relative values.

**[Table 2]**

| Suction yoke size + Back yoke protrusion [50%] | Protrusion X Leakage flux [Gauss] | Protrusion O Leakage flux [Gauss] | Decrease rate | Protrusion X Suction force [mN] | Protrusion O Suction force [mN] | Decrease rate |
|---|---|---|---|---|---|---|
| 0.1605 | 223 | 193 | -13.5% | 1.7 | 1.5 | -11.8% |
| 0.321 | 216 | 190 | -12% | 7.0 | 5.9 | -15.7% |
| 0.4815 | 213 | 185 | -13.2% | 12.9 | 10.8 | -16.3% |
| 0.8025 | 193 | 177 | -8.3% | 28.2 | 23.8 | -15.6% |
| 1.1235 | 186 | 163 | -12.3% | 45.8 | 38.4 | -16.2% |
| 1.4445 | 168 | 145 | -13.7% | 63 | 55.8 | -11.5% |

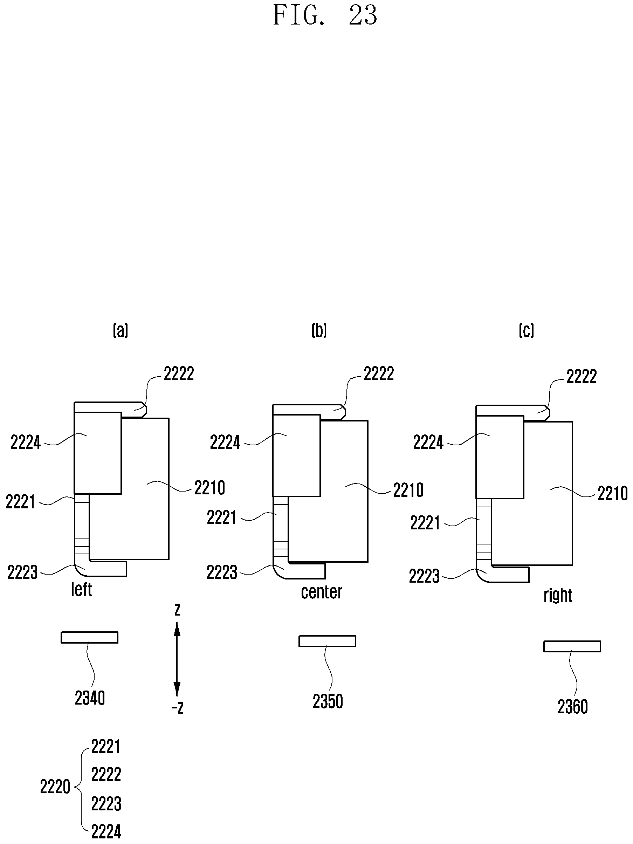

FIG. 23 is a drawing illustrating the position of a suction yoke applied to a structure for shielding a designated area of a lower surface of a permanent magnet using a back yoke. FIG. 23 illustrates an example in which 40% to 60% of the lower surface of a permanent magnet is shielded using a back yoke.

Referring to FIG. 23, a first protrusion 2223, a second protrusion 2222, and a third protrusion 2224 of a back yoke 2220 overlap at least a portion of the lower surface, the upper surface, and the side surface of the permanent magnet 2210. In this case, depending on the position where the suction yoke 2240 is disposed, the amount of leakage magnetic flux of the permanent magnet 2210 and the suction force (e.g., shielding) may vary.

Referring to FIG. 23A, for example, the first protrusion 2223, the second protrusion 2222, and the third protrusion 2224 of the back yoke 2220 are disposed to overlap at least a portion of the lower surface, the upper surface, and the side surface of the permanent magnet 2210, and a suction yoke 2340 is disposed to overlap the left portion of the permanent magnet 2210.

Referring to FIG. 23B, for example, the first protrusion 2223, the second protrusion 2222, and the third protrusion 2224 of the back yoke 2220 are disposed to overlap at least a portion of the lower surface, the upper surface, and the side surface of the permanent magnet 2210, and a suction yoke 2350 is disposed to overlap the center portion of the permanent magnet 2210.

Referring to FIG. 23C, for example, the first protrusion 2223, the second protrusion 2222, and the third protrusion 2224 of the back yoke 2220 are disposed to overlap at least a portion of the lower surface, the upper surface, and the side surface of the permanent magnet 2210, and a suction yoke 2360 is disposed to overlap the right portion of the permanent magnet 2210.

Referring to Table 3 below, in the case where the first protrusion 2223, the second protrusion 2222, and the third protrusion 2224 are formed on the back yoke 2220 and where the suction yoke 2340 is disposed to overlap the left portion of the permanent magnet 2210, the leakage magnetic flux of the permanent magnet 2210 may be about 195 [gauss], and the suction force may be about 11.1 mN.

For example, in the case where the first protrusion 2223, the second protrusion 2222, and the third protrusion 2224 are formed on the back yoke 2220 and where the suction yoke 2350 is disposed to overlap the center portion of the permanent magnet 2210, the leakage magnetic flux of the permanent magnet 2210 may be about 184 [gauss], and the suction force may be about 23.8 mN.

For example, in the case where the first protrusion 2223, the second protrusion 2222, and the third protrusion 2224 are formed on the back yoke 2220 and where the suction yoke 2360 is disposed to overlap the right portion of the permanent magnet 2210, the leakage magnetic flux of the permanent magnet 2210 may be about 164 [gauss], and the suction force may be about 17.4 mN.

For example, under the same conditions, when the first protrusion 2223 of the back yoke 2220 is provided, the suction yoke 2340, 2350, or 2360 may reduce the leakage magnetic flux of the section that is not covered by the first protrusion 2223.

**[Table 3]**

| - Back yoke protrusion ○ | | |
|---|---|---|
| Suction yoke size [0.749] | Leakage flux | Suction force |
| Left | 195 Gauss | 11.1 mN |
| Center | 184 Gauss | 23.8 mN |
| Right | 164 Gauss | 17.14 mN |

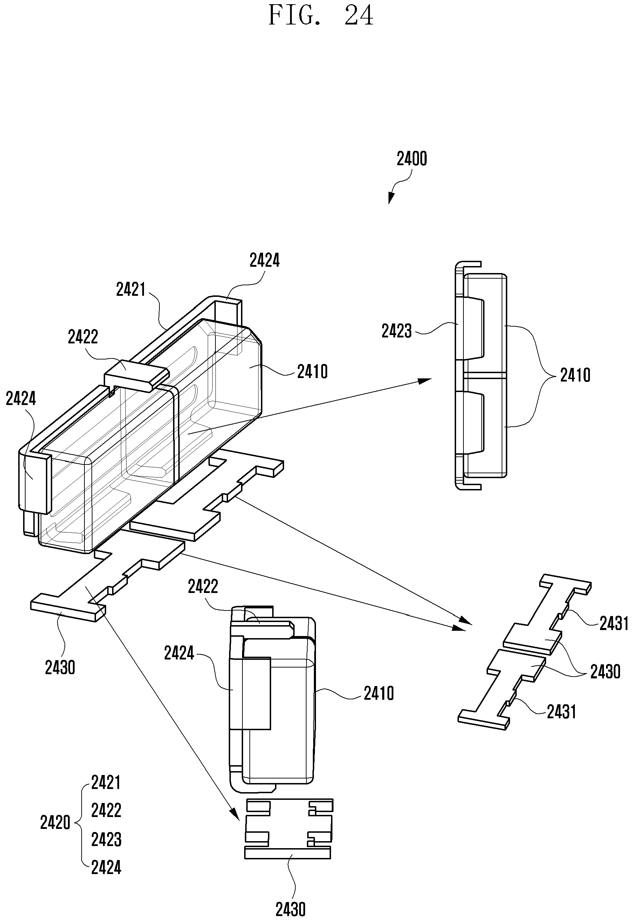

FIG. 24 is a drawing illustrating a state where a suction yoke is applied to a structure in which a back yoke overlaps a lower surface of a permanent magnet by more than a designated range (e.g., 25% of the lower surface of the permanent magnet).

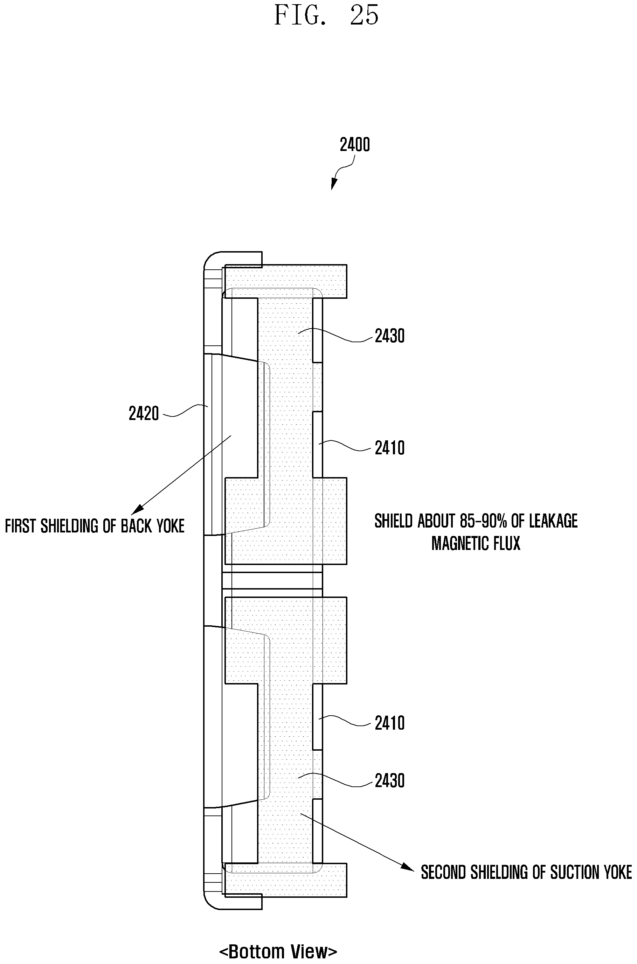

FIG. 25 is a drawing illustrating shielding of a designated range (e.g., 85% to 90%) of the leakage magnetic flux of a permanent magnet using the back yoke and suction yoke shown in FIG. 24. FIG. 25 shows an example of shielding 85% to 90% of the lower surface of the permanent magnet using the back yoke and the suction yoke.

Referring to FIG. 24 and FIG. 25, a camera module (e.g., the camera module 700 in FIG. 8 or the camera module 1000 in FIG. 10B) according to an embodiment of the disclosure may include an OIS drive unit 2400.

According to an embodiment, the OIS drive unit 2400 includes a permanent magnet 2410, a back yoke 2420, and a suction yoke 2430. By providing the back yoke 2420 and the suction yoke 2430 in the OIS drive unit 2400, the leakage magnetic flux of the permanent magnet 2410 (e.g., OIS permanent magnet) is absorbed (e.g., shielded).

According to an embodiment, the camera module (e.g., the camera module 700 in FIG. 8 or the camera module 1000 in FIG. 10B) according to an embodiment of the disclosure may absorb (e.g., shield) the leakage magnetic flux of the permanent magnet 2410 (e.g., AF the permanent magnet) by also providing a back yoke and a suction yoke in an AF drive unit in the same (or similar) manner as the OIS drive unit 2400.

FIG. 24 and FIG. 25 illustrate one permanent magnet 2410 among a plurality of permanent magnets 2410. FIG. 24 and FIG. 25 illustrate one back yoke 2420 among a plurality of back yokes 2420.

According to an embodiment, for example, the back yoke 2420 is disposed to overlap at least a portion of the back, upper, and lower surfaces, excluding the front surface, of the permanent magnet 2410.

For example, the back yoke 2420 may include a first surface 2421 formed to be in contact with the back surface of the permanent magnet 2410.

The back yoke 2420 includes a first protrusion 2423 formed to protrude from the first surface 2421 in a direction substantially perpendicular thereto (e.g., to be bent at approximately 90 degrees) and overlap at least a portion of the lower surface of the permanent magnet 2410.

For example, the back yoke 2420 may include a second protrusion 2422 formed to protrude from the first surface 2421 in a direction substantially perpendicular thereto (e.g., to be bent at approximately 90 degrees) and overlap at least a portion of the upper surface of the permanent magnet 2410.

For example, the back yoke 2420 may include a third protrusion 2424 that protrudes from the first surface 2421 to overlap the side surface (e.g., both side surfaces) of the permanent magnet 2410. The third protrusion 2424 may be positioned between the first protrusion 2423 and the second protrusion 2422.

According to an embodiment, the suction yoke 2430 may be positioned below the permanent magnet 2410 and the back yoke 2420 to be spaced a predetermined distance apart from them. According to an embodiment, the first protrusion 2423 of the back yoke 2420 may be formed in contact with the permanent magnet 2410 to overlap 30% or more of the total area on the surface perpendicular to the surface facing the coil.

For example, the suction yoke 2430 may include a plurality of protrusions 2422, 2423, and 2424 and may be formed in an "I" shape, an "H" shape, or a combination of the "I" shape and the "H" shape when viewed from above.

However, the suction yoke 2430 is not limited thereto, and may be formed in various shapes other than the "I" shape and the "H" shape when viewed from above.

For example, a protrusion 2431 may be further formed on at least a portion of the suction yoke 2430. The protrusion 2431 may be formed on the suction yoke 2430 to reduce the leakage magnetic flux in the section that is not covered by the first protrusion 2423 of the back yoke 2420.

For example, by providing the back yoke 2430 such that the protrusions 2422, 2423, and 2424 of the back yoke 2420 overlap 30% or more of the total area of the upper surface, lower surface, and side surface of the permanent magnet 2410, about 85 to 95% of the leakage magnetic flux of the permanent magnet 2410 may be absorbed (e.g., shielded).

According to an embodiment, the back yoke 2420 and the suction yoke 2430 may be applied to the AF drive unit in the same (or similar) manner as the OIS drive unit 2400, thereby absorbing (e.g., shielding) about 85 to 95% of the leakage magnetic flux of the permanent magnet.

A camera module of an electronic device according to an embodiment of the disclosure includes a lens module 705 or 1010 comprising one or more lenses configured to be moved for providing optical image stabilization (OIS) and autofocus (AF), and a lens drive unit configured to move the lens module 705 or 1010 in x-axis, y-axis, and z-axis directions. The lens drive unit includes a permanent magnet 1080 or 1610 disposed in a first carrier 1030), and a suction yoke 1090 configured to absorb leakage magnetic flux of the first carrier 1030) and the permanent magnet 1080 or 1610. A first surface of the permanent magnet 1080 or 1610 faces a first surface of the back yoke 1070 or 1620. The back yoke 1070 or 1620 includes a first protrusion 1623 protruding from the first surface 1621 of the back yoke. The first protrusion 1623 of the back yoke 1070 or 1620 is disposed to overlap at least a portion of the permanent magnet.

According to an embodiment, the first protrusion 1623 of the back yoke 1070 or 1620 may be disposed to overlap at least a portion of a lower portion of the permanent magnet 1080 or 1610.

According to an embodiment, the suction yoke 1090 may be disposed to be spaced a predetermined distance apart from the permanent magnet 1080 or 1610. The first protrusion 1623 of the back yoke 1070 or 1620 and the suction yoke 1090 may be disposed not to overlap each other when viewed along an optical axis of the lens module, thereby shielding the leakage magnetic flux of the permanent magnet 1080 or 1610.

According to an embodiment, the suction yoke 1090 may be disposed to be spaced a predetermined distance apart from the permanent magnet 1080 or 1610. The first protrusion 1623 of the back yoke 1070 or 1620 and the suction yoke 1090 may be disposed to at least partially overlap each other when viewed along an optical axis of the lens module, thereby shielding the leakage magnetic flux of the permanent magnet 1080 or 1610.

According to an embodiment, the first protrusion 1623 of the back yoke 1070 or 1620 may be configured to overlap the suction yoke 1090 over the entire area thereof, thereby shielding the leakage magnetic flux of the permanent magnet 1080 or 1610.

According to an embodiment, the first protrusion 1623 of the back yoke 1070 or 1620 may be disposed to cover 25% or more of a total area of a lower portion of the permanent magnet 1080 or 1610.

According to an embodiment, the suction yoke 1090 may be formed in an "I" shape, an "H" shape, or a combination of the "I" shape and the "H" shape when viewed from above.

An electronic device including a camera module according to an embodiment of the disclosure may include a display disposed to display a screen in a front direction of the electronic device, a digitizer disposed on a rear surface of the display, electronic components disposed on the rear surface of the display, and a camera module 700 or 1000 configured to capture images in a rear direction of the electronic device. The camera module 700 or 1000 includes a lens module comprising one or more lenses and is configured to be moved to provide optical image stabilization (OIS) and autofocus (AF), and a lens drive unit configured to move the lens module in x-axis, y-axis, and z-axis directions. The lens drive unit includes a permanent magnet 1080 or 1610 disposed in a first carrier 1030, and a suction yoke 1090 configured to absorb leakage magnetic flux of the first carrier 1030 and the permanent magnet 1080 or 1610. A first surface of the permanent magnet 1080 or 1610 faces a first surface of the back yoke 1070 or 1620. The back yoke includes a first protrusion 1623 protruding from the first surface of the back yoke 1070 or 1620. The first protrusion 1623 of the back yoke 1070 or 1620 is disposed to overlap at least a portion of the permanent magnet 1080 or 1610.

According to an embodiment, the first protrusion 1623 of the back yoke 1070 or 1620 may be disposed to cover at least a portion of a lower portion of the permanent magnet 1080 or 1610.

According to an embodiment, the suction yoke 1090 may be disposed to be spaced a predetermined distance apart from the permanent magnet 1080 or 1610. The first protrusion 1623 of the back yoke 1070 or 1620 and the suction yoke 1090 may be disposed not to overlap each other when viewed along an optical axis of the lens module, thereby shielding the leakage magnetic flux of the permanent magnet 1080 or 1610.

According to an embodiment, the suction yoke 1090 may be disposed to be spaced a predetermined distance apart from the permanent magnet 1080 or 1610. The first protrusion 1623 of the back yoke 1070 or 1620 and the suction yoke 1090 may be disposed to at least partially overlap each other when viewed along an optical axis of the lens module, thereby shielding the leakage magnetic flux of the permanent magnet 1080 or 1610.

According to an embodiment, the first protrusion 1623 of the back yoke 1070 or 1620 may be configured to overlap the suction yoke 1090 over the entire area thereof, thereby shielding the leakage magnetic flux of the permanent magnet 1080 or 1610.

According to an embodiment, the first protrusion 1623 of the back yoke 1070 or 1620 may be disposed to cover 25% or more of a total area of a lower portion of the permanent magnet 1080 or 1610.

According to an embodiment, the camera module 700 or 1000 may be of a downward view type, a lens lead folded type, or a downward view folded type.

A camera module according to an embodiment of the disclosure and an electronic device including the camera module may reduce the intensity of leakage magnetic flux directed downward (e.g., toward the digitizer or display) inside the camera module using a back yoke and a suction yoke disposed inside the camera module.

A camera module according to an embodiment of the disclosure and an electronic device including the camera module may reduce the intensity of leakage magnetic flux directed from the camera module toward the digitizer and display, thereby blocking (or reducing) effects on the operation of electronic components disposed inside the electronic device.

The effects obtainable from the disclosure are not limited to those mentioned above, and other effects not mentioned may also be clearly understood by those skilled in the art to which the disclosure pertains from the following description.

## Claims

1. A camera module (700 or 1000) of an electronic device, the camera module comprising:
a lens module (705 or 1010) comprising one or more lenses configured to be moved for an optical image stabilization (OIS) function and autofocus (AF) function; and
a lens drive unit configured to move the lens module (705 or 1010) in x-axis, y-axis, and z-axis directions,
wherein the lens drive unit comprises a permanent magnet (1080 or 1610) disposed in a first carrier (1030), a back yoke (1070) configured to bind the first carrier (1030) and the permanent magnet (1080 or 1610), and a suction yoke (1090; 1630) configured to absorb leakage magnetic flux of the permanent magnet (1080 or 1610),
wherein a first surface of the permanent magnet (1080 or 1610) faces a first surface (1621) of the back yoke (1070 or 1620),
wherein the back yoke (1070 or 1620) comprises a first protrusion (1623) protruding from the first surface (1621) of the back yoke (1070 or 1620), and
wherein the first protrusion (1623) of the back yoke (1070 or 1620) is disposed to overlap at least a portion of the permanent magnet (1080 or 1610).

2. The camera module (700 or 1000) of an electronic device of claim 1,
wherein the first protrusion (1623) of the back yoke (1070 or 1620) is disposed to overlap with at least a portion of a lower end of the permanent magnet (1080 or 1610).

3. The camera module (700 or 1000) of an electronic device of one of claims 1 to 2,
wherein the suction yoke (1090) is disposed to be spaced a predetermined distance apart from the permanent magnet (1080 or 1610), and
wherein the first protrusion (1623) of the back yoke (1070 or 1620) and the suction yoke (1090) are disposed not to overlap each other when viewed along an optical axis of the lens module, thereby shielding the leakage magnetic flux of the permanent magnet (1080 or 1610).

4. The camera module (700 or 1000) of an electronic device of one of claims 1 to 2,
wherein the suction yoke (1090) is disposed to be spaced a predetermined distance apart from the permanent magnet (1080 or 1610), and
wherein the first protrusion (1623) of the back yoke (1070 or 1620) and the suction yoke (1090) are disposed to at least partially overlap each other when viewed along an optical axis, thereby shielding the leakage magnetic flux of the permanent magnet (1080 or 1610).

5. The camera module (700 or 1000) of an electronic device of one of claims 1 to 2,
wherein the first protrusion (1623) of the back yoke (1070 or 1620) is configured to overlap the suction yoke (1090) over the entire area thereof, thereby shielding the leakage magnetic flux of the permanent magnet (1080 or 1610).

6. The camera module (700 or 1000) of an electronic device of one of claims 1 to 5,
wherein the first protrusion (1623) of the back yoke (1070 or 1620) is disposed to cover 25% to 100% of a total area of a lower portion of the permanent magnet (1080 or 1610).

7. The camera module (700 or 1000) of an electronic device of one of claims 1 to 6,
wherein the suction yoke (1090) is formed in an "I" shape, an "H" shape, or a combination of the "I" shape and the "H" shape when viewed from above.

8. The camera module (700 or 1000) of an electronic device of one of claims 1 to 7,
wherein the camera module (700 or 1000) is of a downward view type, a lens lead folded type, or a downward view folded type.

9. An electronic device comprising:
a display disposed to display a screen in a front direction of the electronic device;
a digitizer disposed on a rear surface of the display;
electronic components disposed on the rear surface of the display; and
a camera module (700 or 1000) configured to capture images in a rear direction of the electronic device,
wherein the camera module (700 or 1000) comprises:
a lens module (705 or 1010) comprising one or more lenses and configured to be moved for an optical image stabilization (OIS) function and autofocus (AF) function; and
a lens drive unit configured to move the lens module (705 or 1010) in x-axis, y-axis, and z-axis directions,
wherein the lens drive unit comprises a permanent magnet (1080 or 1610) disposed in a first carrier (1030), a back yoke (1070 or 1620) configured to bind the first carrier (1030) and the permanent magnet (1080 or 1610), and a suction yoke (1090) configured to absorb leakage magnetic flux of the permanent magnet (1080 or 1610),
wherein a first surface of the permanent magnet (1080 or 1610) faces a first surface (1621) of the back yoke (1070 or 1620),
wherein the back yoke (1070 or 1620) comprises a first protrusion (1623) protruding from the first surface of the back yoke (1070 or 1620), and
wherein the first protrusion (1623) of the back yoke (1070 or 1620) is disposed to overlap at least a portion of the permanent magnet (1080 or 1610).

10. The electronic device of claim 9,
wherein the first protrusion (1623) of the back yoke (1070 or 1620) is disposed to cover at least a portion of a lower portion of the permanent magnet (1080 or 1610).

11. The electronic device of one of claims 9 to 10,
wherein the suction yoke (1090) is disposed to be spaced a predetermined distance apart from the permanent magnet (1080 or 1610), and
wherein the first protrusion (1623) of the back yoke (1070 or 1620) and the suction yoke (1090) are disposed not to overlap each other when viewed along an optical axis, thereby shielding the leakage magnetic flux of the permanent magnet (1080 or 1610).

12. The electronic device of one of claims 9 to 11,
wherein the suction yoke (1090) is disposed to be spaced a predetermined distance apart from the permanent magnet (1080 or 1610), and
wherein the first protrusion (1623) of the back yoke (1070 or 1620) and the suction yoke (1090) are disposed to at least partially overlap each other when viewed along an optical axis, thereby shielding the leakage magnetic flux of the permanent magnet (1080 or 1610).

13. The electronic device of one of claims 9 to 11,
wherein the first protrusion (1623) of the back yoke (1070 or 1620) is configured to overlap the suction yoke (1090) over the entire area thereof, thereby shielding the leakage magnetic flux of the permanent magnet (1080 or 1610).

14. The electronic device of one of claims 9 to 13,
wherein the first protrusion (1623) of the back yoke (1070 or 1620) is disposed to cover 25% or more of a total area of a lower portion of the permanent magnet (1080 or 1610).

15. The electronic device of one of claims 9 to 14,
wherein the camera module (700 or 1000) is of a downward view type, a lens lead folded type, or a downward view folded type.
